# EUROPÄISCHE PATENTSCHRIFT

(11) **EP 2 100 364 B1**
(45) Veröffentlichungstag und Bekanntmachung des Hinweises auf die Patenterteilung: **12.09.2018**
(21) Anmeldenummer: 06828678.0
(22) Anmeldetag: 08.12.2006
(51) Int. Cl.: H02M 1/00, H02M 7/483

(54) **STEUERUNG EINES MODULAREN STROMRICHTERS MIT VERTEILTEN ENERGIESPEICHERN**
CONTROL OF A MODULAR POWER CONVERTER WITH DISTRIBUTED ENERGY STORAGES
COMMANDE D'UN CONVERTISSEUR MODULAIRE AVEC DES ACCUMULATEURS D'ÉNERGIE RÉPARTIS

(43) Veröffentlichungstag der Anmeldung: 16.09.2009
(73) Patentinhaber: Siemens Aktiengesellschaft, 80333 München (DE)
(72) Erfinder: DOMMASCHK, Mike, 01945 Guteborn (DE); DORN, Jörg, 96155 Buttenheim (DE); EULER, Ingo, 91056 Erlangen (DE); LANG, Jörg, 95346 Stadtsteinach (DE); TU, Quoc-Buu, 90574 Rosstal (DE); WÜRFLINGER, Klaus, 90419 Nürnberg (DE)
(86) Internationale Anmeldenummer: PCT/DE2006/002247
(87) Internationale Veröffentlichungsnummer: WO 2008/067784

(56) Entgegenhaltungen:
- EP-A- 0 077 968
- LESNICAR A ET AL: "An innovative modular multilevel converter topology suitable for a wide power range" INSPEC, 2003, XP002447365 in der Anmeldung erwähnt
- LESNICAR A ET AL: "A new modular voltage source inverter topology"[Online] 2003, XP002454302 Gefunden im Internet: URL:http://www.unibw.de/eit62/forsch/SP/M2 LC/m2lcveroef> [gefunden am 2007-10-10] in der Anmeldung erwähnt
- CARRASCO J M ET AL: "Analysis and design of direct power control (DPC) for a three phase synchronous rectifier via output regulation subspaces", IEEE TRANSACTIONS ON POWER ELECTRONICS, INSTITUTE OF ELECTRICAL AND ELECTRONICS ENGINEERS, USA, vol. 18, no. 3, 1 May 2003 (2003-05-01), pages 823-830, XP011096111, ISSN: 0885-8993, DOI: 10.1109/TPEL.2003.810862

## Beschreibung

Die vorliegende Erfindung betrifft eine Vorrichtung zum Umrichten eines elektrischen Stromes gemäß Anspruch 1 sowie ein Verfahren zum Umrichten eines Stromes mittels eines Umrichters gemäß Anspruch 8. Vorteilhafte Ausführungsformen sind in den abhängigen Ansprüchen definiert.

Eine solche Vorrichtung und ein solches Verfahren sind beispielsweise aus dem Beitrag von A. Lesnicar und R. Marquardt "An Innovative Modular Multilevel Converter Topology Suitable for a Wide Power Range", der auf der Powertech 2003 erschien, bereits bekannt. Dort ist ein Stromrichter offenbart, der für einen Anschluss an ein Wechselspannungsnetz vorgesehen ist. Der Stromrichter weist für jede Phase des mit ihm zu verbindenen Wechselspannungsnetzes ein Phasenmodul auf, wobei jedes Phasenmodul über einen Wechselspannungsanschluss sowie zwei Gleichspannungsanschlüsse verfügt. Zwischen jedem Gleichspannungsanschluss und dem Wechselspannungsanschluss erstrecken sich Phasenmodulzweige, so dass eine so genannte 6-Puls-Brückenschaltung bereitgestellt ist. Die Modulzweige bestehen aus einer Reihenschaltung von Submodulen, die jeweils aus zwei abschaltbaren Leistungshalbleitern bestehen, denen jeweils gegensinnige Freilaufdioden parallel geschaltet sind. Die abschaltbaren Leistungshalbleiter und die Freilaufdioden sind in Reihe geschaltet, wobei parallel zur besagten Reihenschaltung ein Kondensator vorgesehen ist. Die besagten Komponenten der Submodule sind so miteinander verschaltet, dass am zweipoligen Ausgang jedes Submoduls entweder die Kondensatorspannung oder die Spannung null abfällt.

Die Steuerung der abschaltbaren Leistungshalbleiter erfolgt mittels der so genannten Pulsweitenmodulation. Die Regelungsmittel zur Steuerung der Leistungshalbleiter weisen Messsensoren zum Erfassen von Strömen unter Gewinnung von Stromwerten auf. Die Stromwerte werden einer zentralen Steuerungseinheit zugeführt, die eine Eingangsschnittstelle und eine Ausgangsschnittstelle aufweist. Zwischen der Eingangsschnittstelle und der Ausgangsschnittstelle ist ein Modulator, also eine Softwareroutine, vorgesehen. Der Modulator weist unter anderem eine Auswähleinheit sowie einen Pulsweitengenerator auf. Der Pulsweitengenerator erzeugt die Steuersignale für die einzelnen Submodule. Die abschaltbaren Leistungshalbleiter werden durch die vom Pulsweitengenerator erzeugten Steuersignale von einer Durchgangsstellung, in der ein Stromfluss über die abschaltbaren Leistungshalbleiter ermöglicht ist, in eine Sperrstellung überführt, in der ein Stromfluss über die abschaltbaren Leistungshalbleiter unterbrochen ist. Dabei weist jedes Submodul ein Submodulsensor zum Erfassen einer am Kondensator abfallenden Spannung auf.

Weitere Beiträge zum Steuerverfahren für eine so genannte Multi-Level-Stromrichtertopologie sind von R. Marquardt, A. Lesnicar, J. Hildinger, "Modulares Stromrichterkonzept für Netzkupplungsanwendung bei hohen Spannungen", erschienen auf der ETG-Fachtagung in Bad Nauenheim, Deutschland 2002, von A. Lesnicar, R. Marquardt, "A new modular voltage source inverter topology", EPE" 03 Toulouse, Frankreich 2003 und von R. Marquardt, A. Lesnicar "New Concept for High Voltage - Modular Multilevel Converter", PESC 2004 Conference in Aachen, Deutschland, bekannt.

Aus der derzeit noch unveröffentlichten deutschen Patentanmeldung 10 2005 045 090.3 ist ein Verfahren zur Steuerung eines mehrphasigen Stromrichters mit verteilten Energiespeichern offenbart. Die offenbarte Vorrichtung weist ebenfalls eine Multi-Level-Stromrichtertopologie mit Phasenmodulen auf, die über einen symmetrisch in der Mitte jedes Phasenmoduls angeordneten Wechselspannungsanschluss und zwei Gleichspannungsanschlüsse verfügen. Jedes Phasenmodul ist aus zwei Phasenmodulzweigen zusammengesetzt, die sich zwischen dem Wechselspannungsanschluss und einem der Gleichspannungsanschlüsse erstrecken. Jeder Phasenmodulzweig umfasst wiederum eine Reihenschaltung aus Submodulen, wobei jedes Submodul aus abschaltbaren Leistungshalbleitern und diesen antiparallel geschalteten Freilaufdioden besteht. Ferner verfügt jedes Submodul über einen unipolaren Kondensator. Zur Regelung der Leistungshalbleiter dienen Regelungsmittel, die auch zum Einstellen von Zweigströmen eingerichtet sind, welche zwischen den Phasenmodulen fließen. Durch die Steuerung der Zweigströme können beispielsweise Stromschwingungen aktiv gedämpft und Betriebspunkte mit kleineren Ausgangsfrequenzen vermieden werden. Darüber hinaus kann eine gleichmäßige Belastung aller abschaltbaren Halbleiterschalter sowie eine Symmetrierung von stark unsymmetrischen Spannungen herbeigeführt werden.

Aus dem Dokument "Analysis and design of direct power control (DPC) for a three phase synchronous rectifier via output regulation subspaces" von J. M. Carrasco et al, IEEE Transactions on Power Electronics, Institute of Electrical and Electronics Engineers, USA, Bd. 18, Nr. 3, 1. Mai 2003, Seiten 823-830, XP011096111, 2003, ISSN: 0885-8993 ist eine Regelung für einen dreiphasigen Gleichrichter bekannt. Bei dieser Regelung wird das Konzept der "output regulation subspaces" (ORS) verwendet. Die Regelung enthält eine innere Regelschleife, welche für die Ansteuerung der Ventile des Gleichrichters zuständig ist, und eine äußere Regelschleife, welche einen Tiefpassfilter und einen Integrator aufweist.

Aufgabe der Erfindung ist es, eine Vorrichtung der eingangs genannten Art bereitzustellen, deren Regelung einfach an eine beliebige Anzahl von Submodulen in jedem Phasenmodulzweig angepasst werden kann.
Die Erfindung löst diese Aufgabe ausgehend von der eingangs genannten Vorrichtung dadurch, dass die Regelungsmittel eine Stromregeleinheit und jeweils einem Phasenmodulzweig zugeordnete Ansteuereinheiten aufweisen, wobei die Stromregeleinheit zum Bereitstellen von Zweigspannungssollwerten für die Ansteuereinheiten eingerichtet ist und die Ansteuereinheiten zwischen die Stromregeleinheit und die Submodule geschaltet und zur Erzeugung von Steuersignalen für die besagten Submodule eingerichtet sind,
wobei die Ansteuereinheiten Kondensatorspannungswerte sämtlicher Submodule des ihr zugeordneten Phasenmodulzweiges als Submodul-Istwerte erhalten, diese Submodul-Istwerte zum Erhalt eines Zweigenergieistwertes summieren und den Zweigenergieistwert der Stromregeleinheit zuführen,
wobei die Ansteuereinheiten von der Stromregeleinheit einen Zweigspannungssollwert erhalten,
und wobei die Ansteuereinheiten Steuersignale für die ihnen zugeordneten Submodule erzeugen derart, dass die an der Reihenschaltung dieser Submodule anfallende Spannung dem jeweiligen Zweigspannungssollwert möglichst entspricht.

Die Erfindung löst diese Aufgabe ausgehend von dem eingangs genannten Verfahren dadurch, dass eine Stromregeleinheit mit Istwerten und mit Sollwerten versorgt wird, von der Stromregeleinheit in Abhängigkeit der Istwerte und der Sollwerte mittels Regler Zweigspannungssollwerte bestimmt werden, die jeweils einem Phasenmodulzweig zugeordnet sind, die Zweigspannungssollwerte jeweils einer Ansteuereinheit zugeführt werden, und von jeder Ansteuereinheit in Abhängigkeit der Zweigspannungssollwerte Steuersignale für die ihr zugeordneten Submodule erzeugt werden derart, dass die an der Reihenschaltung dieser Submodule anfallende Spannung dem jeweiligen Zweigspannungssollwert möglichst entspricht, wobei die Ansteuereinheiten Kondensatorspannungswerte sämtlicher Submodule des ihr zugeordneten Phasenmodulzweiges als Submodul-Istwerte erhalten, von den Ansteuereinheiten diese Submodul-Istwerte zum Erhalt eines Zweigenergieistwertes summiert werden und von den Ansteuereinheiten der Zweigenergieistwert der Stromregeleinheit zugeführt wird.

Die erfindungsgemäße Vorrichtung weist Regelungsmittel auf, die aus einer zentralen Stromregelungseinheit bestehen. Die besagte Stromregelungseinheit ist mit den Messsensoren verbunden, die zum Erfassen von elektrischen Messgrößen, wie Strom oder Spannung, vorgesehen sind, wobei die Messwerte der Regelung als so genannte Istwerte zugeführt werden. Der Stromregeleinheit werden darüber hinaus Sollwerte zugeführt, an welche die Istwerte angepasst werden sollen. Handelt es sich bei den Sollwerten beispielsweise um eine vorgegebene Sollwirkleistung, wirkt eine Änderung beispielsweise des Gleichstromes zum Erreichen der Sollwirkleistung sich auch auf eine Änderung der wechselspannungsseitigen Wechselströme des Umrichters aus. Mit anderen Worten sind die Istwerte in einem hohen Maße miteinander gekoppelt. Die Stromregeleinheit dient daher im Wesentlichen zur Entkopplung der Regelgrößen.

Im Gegensatz zu den aus dem Stand der Technik bekannten Steuerungsverfahren werden die Steuersignale für die Submodule erfindungsgemäß nicht von einer zentralen Stromregeleinheit erzeugt. Vielmehr ist für jeden Phasenmodulzweig eine unabhängige Ansteuereinheit vorgesehen. Die Stromregeleinheit erzeugt für jede Ansteuereinheit wenigstens einen Zweigsollwert. Die Ansteuereinheit bestimmt und erzeugt dann die Steuersignale für die einzelnen Submodule auf der Grundlage jedes Zweigsollwertes. Die erfindungsgemäße Vorrichtung weist daher Regelungsmittel auf, die einfach an eine sich verändernde Anzahl von Submodulen angepasst werden kann. Die Stromregeleinheit ist lediglich auf die Anzahl der Phasenmodulzweige hin ausgerichtet, die von der Anzahl der Submodule in jedem Phasenmodulzweig unabhängig ist. Eine Anpassung der erfindungsgemäßen Vorrichtung, also des erfindungsgemäßen Umrichters, an eine veränderte Netzspannung oder Gleichspannung mit einer Erhöhung der Anzahl der Submodule im Gefolge wirkt sich daher lediglich auf die Ansteuereinheiten aus.

Vorteilhafterweise verfügt jedes Submodul über einen Submodulsensor, der mit der dem Submodul zugeordneten Ansteuereinheit verbunden ist und einen Submodul-Istwert bereitstellt. Der Submodul-Istwert wird der angebundenen Ansteuereinheit zugeführt, die anschließend einen Submodulsummenistwert durch Aufsummieren der Submodul-Istwerte bildet, die von Submodulen stammen, die von der Ansteuereinheit ein- oder mit anderen Worten aktiv geschaltet wurden. Nur aktiv geschaltete Submodule eines Phasenmodulzweiges liefern einen Beitrag zum entsprechenden Submodulsummenistwert des Phasenmodulzweiges. Dabei erzeugt die Ansteuereinheit solche Steuerungssignale für die einzelnen Submodule, dass der Submodulsummenistwert dem von der Stromregeleinheit zur Verfügung gestellten Zweigsollwert möglichst genau entspricht.

Der Submodulistwert ist zweckmäßigerweise ein Energiespeicherspannungswert Uc, der einer an dem Energiespeicher des jeweiligen Submoduls abfallenden Spannung entspricht. In diesem Fall ist der Zweigsollwert ein Zweigspannungssollwert, also ein Sollwert für die an den aktiv oder zugeschalteten Submodulen eines Phasenmodulzweiges in Summe abfallenden Spannung.

Vorteilhafterweise ist jede Ansteuereinheit mit allen Submodulsensoren des ihr zugeordneten Phasenmodulzweiges verbunden und zum Bereitstellen eines Zweigenergieistwertes für die Stromregeleinheit eingerichtet, wobei der Zweigenergieistwertes die Summe der Submodulistwerte aller Submodule, also sowohl der zugeschalteten aktiven Submodule als auch der abgeschalteten inaktiven Submodule des jeweiligen Phasenmodulzweiges ist. Darüber hinaus dient der Zweigenergieistwert selbst zur Bestimmung des Zweigsollwertes und insbesondere des Zweigspannungssollwertes.

Gemäß einer vorteilhaften Weiterentwicklung ist die Stromregeleinheit zum Bereitstellen eines Zweigspannungssollwertes Up1ref, Up2ref, Up3ref, Un1ref, Un2ref, Un3ref für jede Ansteuereinheit eingerichtet.

Die Messsensoren umfassen zweckmäßigerweise Zweigstromsensoren, die zum Messen von Phasenmodulzweigströmen Izwg eingerichtet sind, die in den Phasenmodulzweigen fließen. Gemäß dieser vorteilhaften Weiterentwicklung ist eine Regelung der Phasenmodulzweigströme möglich. Die Phasenmodulzweigströme Izwg umfassen Phasenströme, die wechselspannungsseitig des Phasenmoduls also beispielsweise zwischen einem Transformator zum Anschluss eines Wechselspannungsnetzes an die erfindungsgemäße Vorrichtung und dem Wechselspannungsanschluss des Phasenmoduls fließen. Darüber hinaus umfassen die Phasenmodulzweigströme Gleichstromanteile und Kreisströme. Sind alle Phasenmodulzweigströme der Vorrichtung bekannt, lassen sich die Kreisströme berechnen. Da die Kreisströme von außen nicht sichtbar sind, ermöglicht ihre Regelung eine unabhängige Symmetrierung der in den Phasenmodulzweigen gespeicherten Energie. Durch die Regelung der Phasenmodulzweigströme und somit der Kreisströme können alle Freiheitsgrade der erfindungsgemäßen Vorrichtung effektiv genutzt werden. So reduziert beispielsweise eine aktive Bedämpfung der Kreisströme den Aufwand, der im Zusammenhang mit passiven Elementen, wie zum Beispiel im Zusammenhang mit Zweigstromdrosseln getrieben werden muss, beträchtlich.

Daher ist die Stromregeleinheit vorteilhafterweise zum Regeln der Phasenmodulzweigströme Izwg eingerichtet.

Gemäß einer bevorzugten Weiterentwicklung umfassen die Sollwerte einen Blindstromsollwert Iqref, einen Wirkstromsollwert Ipref und/oder einen Gleichstromsollwert Id. Auf diese Weise ist eine besonders einfache Handhabung der erfindungsgemäßen Vorrichtung durch einen Nutzer ermöglicht. Der Benutzer gibt lediglich die zu übertragende Wirk- und Blindleistung in die Regelung ein. Hieraus werden mit Kenntnis der herrschenden Nennspannungen Blindstromsollwerte bestimmt.

Hinsichtlich des erfindungsgemäßen Verfahrens ist es vorteilhaft, dass die Istwerte Zweigenergieistwerte umfassen, die von den Ansteuereinheiten zur Stromregeleinheit übertragen werden, wobei jeder Zweigenergieistwert wieder die Summe der Submodulistwerte von allen Submodulen eines Phasenmodulzweiges ist unabhängig davon, ob diese zugeschaltet sind oder nicht.

Vorteilhafterweise werden die Zweigsollwerte durch eine Linearkombination von Spannungszwischensollwerten gebildet. Die Spannungszwischensollwerte sind weitestgehend voneinander entkoppelt und dienen zum Aufbau einer anschaulichen und übersichtlichen Regelung.

Gemäß einer diesbezüglich zweckmäßigen Weiterentwicklung umfassen die Spannungszwischensollwerte einen Gleichspannungssollwert Udc, wobei der Gleichspannungssollwert Udc in Abhängigkeit der Differenz zwischen einem vorgegebenen Referenzgleichstrom Idsoll und einem durch Messung gewonnenen Gleichstrommesswert Id bestimmt wird.

Gemäß einer diesbezüglich zweckmäßigen Weiterentwicklung wird eine Gesamtspannungsdifferenz durch Bilden der Differenz zwischen einem vorgegebenen Summenspannungs-Sollwert ucref und einem durch Aufsummieren der an allen Energiespeichern des Umrichters abfallenden Spannungen ermittelten Gesamtenergiemesswert uc ermittelt wird, und die Gesamtspannungsdifferenz einem Regler unter Gewinnung eines Gesamtenergieabweichungsstromwertes zugeführt wird, wobei der Gesamtenergieabweichungsstromwert mit einem Gleichstrom-Sollwert Idref unter Gewinnung des Referenzgleichstromwertes Idsoll aufsummiert wird. Der hierbei eingesetzte Regler ist beispielsweise ein einfacher Proportionalregler. Jedoch können im Rahmen der Erfindung auch andere Regler verwendet werden. Gemäß dieser vorteilhaften Weiterentwicklung ist bei der Regelung sichergestellt, dass die in den Energiespeicher gespeicherte Energie nicht über ein vorbestimmtes Maß hinaus erhöht werden kann. Eine Zerstörung der erfindungsgemäßen Vorrichtung aufgrund der Speicherung einer zu großen Energie ist somit vermieden. Für den Fachmann ist es offensichtlich, dass bei der Einstellung der Gesamtenergie der erfindungsgemäßen Vorrichtung, also des Umrichters, anstelle der Aufsummierung der gemessenen Spannungsmesswerte aller Energiespeicher der Vorrichtung auch die Energie unter Gewinnung von Energiemesswerten ermittelt werden kann, die in den Energiespeichern der Submodule gespeichert ist. uc entspräche dann der Summe der Energiewerte aller Energiespeicher der Vorrichtung. Ein Maß für den Energiewert eines Energiespeichers ergibt sich beispielsweise aus der an dem besagten Energiespeicher abfallenden Spannung durch einfaches Quadrieren der besagten Spannung.

Vorteilhafterweise umfassen die Spannungszwischensollwerte für jede Ansteuereinheit Netzphasenspannungssollwerte Unetz1, Unetz2, Unetz3. Die Netzphasenspannungssollwerte Unetz1, Unetz2, Unetz3 wirken sich im Wesentlichen so auf die Vorrichtung aus, dass sich ein gewünschter Phasenstrom I1, I2, I3, der wechselspannungsseitig eines jeden Phasenmoduls fließt, einstellt.

Gemäß einer diesbezüglich zweckmäßigen Weiterentwicklung werden die Netzphasenspannungssollwerte Unetz1, Unetz2, Unetz3 aus Phasenstromwerten, die durch Messen der wechselspannungsseitigen Phasenströme I1, I2, I3 der Phasenmodule gewonnen werden, in Abhängigkeit von Stromsollwerten mittels eines Reglers bestimmt. Gemäß dieser zweckmäßigen Weiterentwicklung werden die Phasenströme auf der Wechselspannungsseite der erfindungsgemäßen Vorrichtung gemessen. Dies kann beispielsweise in unmittelbarer Nähe der Wechselspannungsanschlüsse der Phasenmodule durchgeführt werden. Dazu werden entsprechende Stromwandler mit einem Wechselstromleiter in Wechselwirkung gebracht, wobei die Wechselstromleiter-mit dem Wechselspannungsanschluss verbunden sind. Abweichend hiervon kann jedoch auch der Netzstrom In1, In2 und In3 gemessen werden, der in jeder Phase des Wechselstromnetzes fließt, das mit den Wechselspannungsanschlüssen über die Wechselstromleiter und einen Transformator verbunden ist.

Gemäß einer diesbezüglich zweckmäßigen Weiterentwicklung werden die Netzphasenspannungssollwerte Unetz1, Unetz2, Unetz3 in Abhängigkeit von Phasenspannungsmesswerten, die durch Messen der wechselspannungsseitigen Phasenspannungen U1, U2, U3 der Phasenmodule gewonnen werden, in Abhängigkeit von Sollwerten mittels eines Reglers bestimmt. Die Gewinnung der Netzphasenspannungssollwerte Unetz1, Unetz2, Unetz3 kann daher auch auf der Grundlage von der Messung der Netzspannungen erfolgen.

Vorteilhafterweise umfassen die Spannungszwischensollwerte für jeden Phasenmodulzweig einen Zweigspannungszwischensollwert Uzwgp1, Uzwgp2, Uzwgp3, Uzwgnl, Uzwgn2 und Uzwgn3.

Gemäß einer diesbezüglich zweckmäßigen Weiterentwicklung werden die Zweigspannungszwischensollwerte Uzwgp1,...,Uzwgn3 in Abhängigkeit von erweiterten Zweigstromwerten Ip1, Ip2, Ip3, In1, In2, In3 mittels eines Reglers bestimmt.

Vorteilhafterweise wird jeder erweiterte Zweigstromwert Ip1, Ip2, Ip3, In1, In2, In3 durch Bilden der Summe aus einem Phasenmodulzweigstrommesswert Izwgp1,...,Izwgn3, der durch Erfassen eines in dem jeweiligen Phasenmodulzweig fließenden Phasenmodulzweigstromes gewonnen wird, aus festgelegten Kreisstromsollwerten Ikr1, Ikr2, Ikr3 und aus festgelegten Symmetrierungsstromsollwerten Ibalp1,...,Ibaln3 berechnet, wobei die Symmetrierungsstromsollwerte Ibalp1,...Ibaln3 in Abhängigkeit der Zweigenergieistwerte festgelegt werden. Die bei diesem Regelungsschritt vorgegebenen Sollwerte, also die Kreisstromsollwerte Ikr1, Ikr2, Ikr2 zum Festlegen der Kreisströme, die Anteile der Zweigströme sind, und die Symmetrierungsstromsollwerte Ibalp1,...,Ibaln3 zum Festlegen eines Symmetrierungsstromes, werden gemeinsam mit dem durch Messung ermittelten Phasenmodulzweigstrommesswert Izwg aufsummiert, wobei deren Summenwert dem besagten erweiterten Zweigstromwert Ip1,...,In3 entspricht. Der erweitere Zweigstromwert wird anschließend zweckmäßigerweise einem Regler zugeführt, der daraus Zweigspannungszwischensollwerte Uzwg erzeugt.

Vorteilhafterweise umfassen die Zweigspannungszwischensollwerte eine Asymmetriesollspannung Uasym.

Gemäß einer diesbezüglich zweckmäßigen Weiterentwicklung wird die Asymmetriesollspannung Uasym durch Messen der Spannung zwischen einem positiven Gleichstromanschluss und Erde unter Gewinnung eines positiven Gleichspannungswertes Udp und durch Messen der Spannung zwischen einem negativen Gleichspannungsanschluss und Erde unter Gewinnung eines negativen Gleichspannungswertes Udn, durch Bilden der Differenz der Beträge des positiven und des negativen Gleichspannungswerts unter Gewinnung einer Gleichspannungsdifferenz Δud und durch Anlegen der Gleichspannungsdifferenz Δud an den Eingang eines Reglers unter Gewinnung der Asymmetriesollspannung am Ausgang des Reglers festgelegt.

Zweckmäßigerweise weisen die Zweigspannungszwischen-Sollwerte Balancierungsspannungs-Sollwerte Ubalpl, Ubalp2, Ubalp3, Ubaln1, Ubaln2, Ubaln3 auf, wobei Energiespeicherspannungswerte Uc, die den an den Energiespeichern abfallenden Spannungen entsprechen, erfasst werden, die Energiespeicherspannungswerte Uc eines Phasenmodulzweiges 6p1, 6p2, 6p3, 6n1, 6n2, 6n3 unter Gewinnung von Zweigenergieistwerten Uc∑p1, Uc∑p2, Uc∑p3, Uc∑n1, Uc∑n2, Uc∑n3 aufsummiert werden, die Zweigenergieistwerte Uc∑p1, Uc∑p2, Uc∑p3, Uc∑n1, Uc∑n2, Uc∑n3 miteinander verglichen und ein aus dem Vergleich abgeleiteter Wert an einen Regler übertragen wird und die Balancierungsausgleichsspannungen Ubalpl, Ubalp2, Ubalp3, Ubaln1, Ubaln2, Ubaln3 am Ausgang des Regler abgegriffen werden. Bei der Bildung der Zweigenergieistwerte werden alle Submodule eines Submodulzweiges berücksichtig unabhängig davon, ob diese zugeschaltet sind oder nicht. Die Zweigenergieistwerte stellen somit ein Maß der Energie dar, die in einem Phasenmodulzweig gespeichert ist. Der Fachmann erkennt, dass es in diesem Zusammenhang auch möglich ist, anstelle der an den Energiespeichern abfallenden Spannungen die Quadrate dieser Spannungen aufzusummieren und auf diese Weise den Zweigenergieistwert zu bilden. Ferner sei darauf hingewiesen, dass eine Symmetrierung der erfindungsgemäßen Vorrichtung auch mit dem weiter oben beschriebenen Symmetrierungsstromsollwerten Ibal erfolgen kann.

Vorteilhafterweise werden zur Bestimmung der Zweigspannungszwischensollwerte Uzwgp1,...,Uzwgn3 erweitere Zweigstromwerte Ip1,...,In3 als Eingangsgrößen der Regelung in einen Netzstromanteil und in einen Kreisstromanteil zerlegt. Diese Zerlegung ermöglicht einen übersichtlichen Aufbau der Regelungsschritte, die von der Stromregeleinheit durchlaufen werden.

Vorteilhafterweise wird jeder erweitere Zweigstromwert Ip1,...,In3 unabhängig von den restlichen Zweigstromwerten Ip1,...,In3 geregelt. Dies bedeutet, dass jeder erweitere Zweigstromwert beispielsweise gemeinsam mit zweckmäßigen Sollwerten jeweils einem einzigen Regler zugeführt wird. Am Ausgang des Reglers können die Zweigspannungszwischensollwerte Uzwgp1,...,Uzwgn3 abgegriffen werden.

Gemäß einer weiteren vorteilhaften Ausgestaltung der Erfindung werden durch Messen der wechselspannungsseitigen Phasenströme Phasenstromwerte I1, I2, I3 und durch Messen der wechselspannungsseitigen Phasenspannungen der Phasenmodulzweige Phasenspannungswerte U1, U2, U3 gewonnen, aus den Phasenstromwerten I1, I2, I3 und den Phasenspannungswerten U1, U2, U3 in Abhängigkeit von Sollwerten mittels eines Reglers Hilfsstromwerte IHal, IHbe bestimmt, die Hilfsstromwerte I-Hal, IHbe zu den erweiterten Zweigstromwerten Ip1,...,In3 unter Gewinnung von Hilfssummen oder Hilfsdifferenzen hinzu addiert beziehungsweise von diesen abgezogen, wobei die Hilfssummen und die Hilfsdifferenzen an den Eingang eines Reglers gelegt werden und wobei am Ausgangs des besagten Reglers die Zweigspannungszwischensollwerte Uzwgp1,...,Uzwgn3 abgegriffen werden. Dabei ist der Regler beispielsweise ein Proportionalregler.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel einer erfindungsgemäßen Vorrichtung in einer schematischen Darstellung,
- Figur 2: eine Ersatzbilddarstellung eines Submoduls einer Vorrichtung gemäß Figur 1,
- Figur 3: die Struktur der Regelungsmittel einer Vorrichtung gemäß Figur 1,
- Figur 4: eine Linearkombination von Zweigspannungszwischensollwerten zur Ermittlung der Zweigspannungssollwerte für die Ansteuereinheiten in schematischer Darstellung,
- Figur 5: eine schematische Darstellung der Ermittlung von Netzphasenspannungssollwerten Unetz,
- Figur 6: eine schematische Darstellung zur Verdeutlichung des Verfahrensschrittes zur Ermittelung von Zweigspannungszwischensollwerten Uzwg aus erweiterten Zweigstromwerten,
- Figur 7: eine schematische Darstellung zur Bestimmung der erweiterten Zweigstromwerte Ip gemäß Figur 6,
- Figur 8: eine schematische Darstellung einer Möglichkeit, Kreisstromsollwerte Ikr zu erzeugen,
- Figur 9: eine schematische Darstellung zur Bestimmung eines Gleichsspannungssollwertes Udc,
- Figur 10: eine Übersicht zur Verdeutlichung der Bestimmung der Symmetrierungsspannung Uasym,
- Figur 11: eine weitere Möglichkeit zur Erzeugung von Zweigspannungszwischensollwerten Uzwg,
- Figur 12: eine weitere Möglichkeit zur Ermittlung von Zweigspannungszwischensollwerten Uzwg und
- Figur 13: eine weitere Möglichkeit zur Ermittlung von Zweigspannungszwischensollwerten Uzwg zeigen.

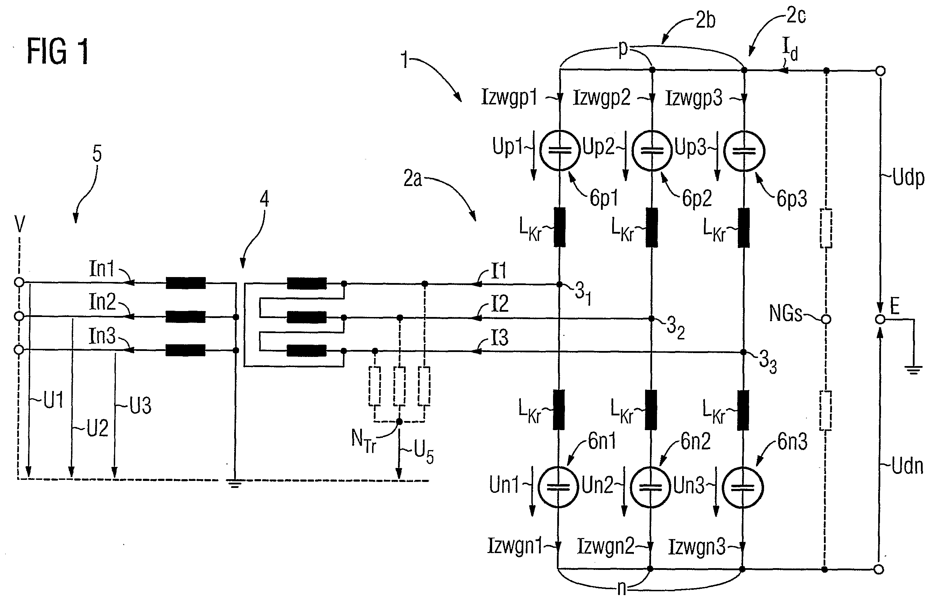

Figur 1 zeigt ein Ausführungsbeispiel der erfindungsgemäßen Vorrichtung 1, die aus drei Phasenmodulen 2a, 2b und 2c zusammengesetzt ist. Jedes Phasenmodul 2a, 2b und 2c ist mit einer positiven Gleichspannungsleitung p sowie mit einer negativen Gleichspannungsleitung n verbunden, so dass jedes Phasenmodul 2a,2b,2c zwei Gleichspannungsanschlüsse aufweist. Ferner ist für jedes Phasenmodul 2a, 2b und 2c jeweils ein Wechselspannungsanschluss 3₁, 3₂ und 3₃ vorgesehen. Die Wechselspannungsanschlüsse 3₁, 3₂ und 3₃ sind über einen Transformator 4 mit einem dreiphasigen Wechselspannungsnetz 5 verbunden. An den Phasen des Wechselspannungsnetzes 5 fallen die Phasenspannungen U1, U2 und U3 ab, wobei Netzströme In1, In2 und In3 fließen. Der wechselspannungsseitige Phasenstrom eines jeden Phasenmoduls wird mit I1, I2 und I3 bezeichnet. Der Gleichspannungsstrom ist I_{d}. Zwischen jedem der Wechselspannungsanschlüsse 3₁, 3₂ oder 3₃ und der positiven Gleichspannungsleitung p erstrecken sich Phasenmodulzweige 6p1, 6p2 und 6p3. Zwischen jedem Wechselspannungsanschluss 3₁, 3₂, 3₃ und der negativen Gleichspannungsleitung n sind die Phasenmodulzweige 6n1, 6n2 und 6n3 ausgebildet. Jeder Phasenmodulzweig 6p1, 6p2, 6p3, 6n1, 6n2 und 6n3 besteht aus einer Reihenschaltung aus in Figur 1 nicht ausführlich dargestellten Submodulen und einer Induktivität, die in Figur 1 mit L_{Kr} bezeichnet ist.

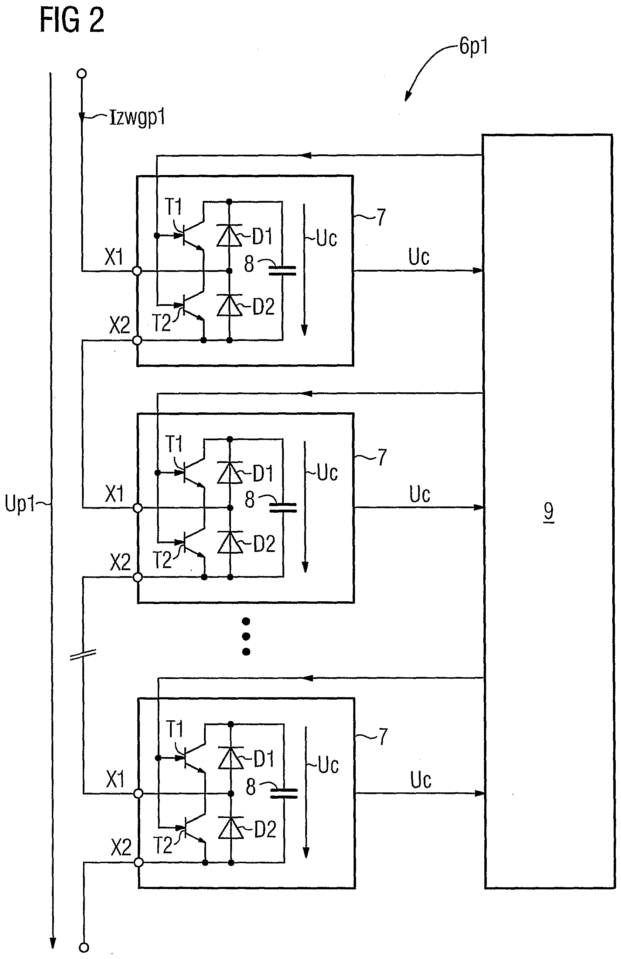

In Figur 2 ist die Reihenschaltung der Submodule 7 und insbesondere der Aufbau der Submodule durch ein elektrisches Ersatzschaltbild genauer dargestellt, wobei in Figur 2 lediglich der Phasenmodulzweig 6p1 herausgegriffen wurde. Die restlichen Phasenmodulzweige sind jedoch identisch aufgebaut. Es ist erkennbar, dass jedes Submodul 7 zwei in Reihe geschaltete abschaltbare Leistungshalbleiter T1 und T2 aufweist. Abschaltbare Leistungshalbleiter sind beispielsweise so genannte IGBTs, GTOs, IGCTs oder dergleichen. Diese sind dem Fachmann als solche bekannt, so dass eine ausführliche Darstellung an dieser Stelle entfallen kann. Jedem abschaltbaren Leistungshalbleiter T1, T2 ist eine Freilaufdiode D1, D2 antiparallel geschaltet. Parallel zur Reihenschaltung der abschaltbaren Leistungshalbleiter T1, T2 beziehungsweise der Freilaufdioden D1 und D2 ist ein Kondensator 8 als Energiespeicher geschaltet. Jeder Kondensator 8 ist unipolar aufgeladen. An den zweipoligen Anschlussklemmen X1 und X2 jedes Submoduls 7 können nunmehr zwei Spannungszustände erzeugt werden. Wird von einer Ansteuereinheit 9 beispielsweise ein Ansteuersignal erzeugt, mit dem der abschaltbare Leistungshalbleiter T2 in seine Durchgangsstellung überführt wird, in der ein Stromfluss über den Leistungshalbleiter T2 ermöglicht ist, fällt an den Klemmen X1, X2 des Submoduls 7 die Spannung null ab. Dabei befindet sich der abschaltbare Leistungshalbleiter T1 in seiner Sperrstellung, in der ein Stromfluss über den abschaltbaren Leistungshalbleiter T1 unterbrochen ist. Dies verhindert die Entladung des Kondensators 8. Wird hingegen der abschaltbare Leistungshalbleiter T1 in seine Durchgangsstellung, der abschaltbare Leistungshalbleiter T2 jedoch in seine Sperrstellung überführt, liegt an den Klemmen X1, X2 des Submoduls 7 die volle Kondensatorspannung Uc an.

Das Ausführungsbeispiel der erfindungsgemäßen Vorrichtung gemäß Figur 1 und 2 wird auch als so genannter Multi-Level-Stromrichter bezeichnet. Ein solcher Multi-Level-Stromrichter ist beispielsweise zum Antrieb elektrischer Maschinen, wie beispielsweise Motoren oder dergleichen, geeignet. Darüber hinaus eignet sich ein solcher Multilevelstromrichter auch für einen Einsatz im Bereich der Energieverteilung und - übertragung. So dient die erfindungsgemäße Vorrichtung beispielsweise als Kurzkupplung, die aus zwei gleichspannungsseitig miteinander verbundenen Stromrichtern besteht, wobei die Stromrichter jeweils mit einem Wechselspannungsnetz verbunden sind. Solche Kurzkupplungen werden zum Energieaustausch zwischen zwei Energieverteilungsnetzen eingesetzt, wobei die Energieverteilungsnetze beispielsweise eine unterschiedliche Frequenz, Phasenlage, Sternpunktbehandlung oder dergleichen aufweisen. Darüber hinaus kommen Anwendungen im Bereich der Blindleistungskompensation, als so genannte FACTS (Flexible AC Transmission Systems) in Betracht. Auch die Hochspannungsgleichstromübertragung über lange Strecken hinweg ist mit solchen Multilevelstromrichtern denkbar. Aufgrund der Fülle der unterschiedlichen Anwendungsmöglichkeiten ergeben sich viele unterschiedliche Betriebsspannungen, an welche die jeweilige erfindungsgemäße Vorrichtung anzupassen ist. Aus diesem Grunde kann die Anzahl der Submodule von einigen wenigen bis hin zu mehreren hundert Submodulen 7 variieren. Um für diese unterschiedlich hohe Anzahl von Submodulen 7 auf Regelungsmittel zurück greifen zu können, die einfach an die unterschiedliche Anzahlen von Submodulen 7 anpassbar sind, weist die Erfindung eine gegenüber dem Stand der Technik veränderte Struktur auf.

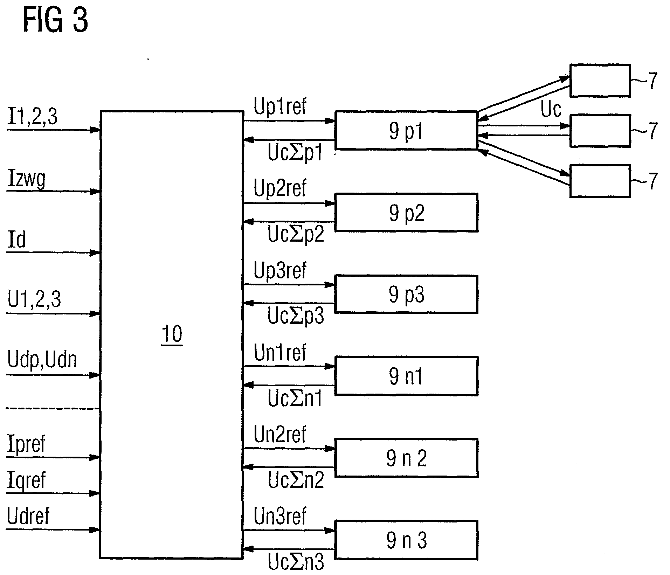

Die besagte Struktur der Regelungsmittel ist in Figur 3 verdeutlicht. So umfassen die Regelungsmittel eine Stromregeleinheit 10 sowie Ansteuereinheiten 9p1, 9p2, 9p3 und 9n1 und 9n2 und 9n3. Jede der Ansteuereinheiten ist einem Phasenmodulzweig 6p1, 6p2, 6p3, 6n1, 6n2 beziehungsweise 6n3 zugeordnet. Die Ansteuereinheit 9p1 ist beispielsweise mit jedem Submodul 7 des Phasenmodulzweiges 6p1 verbunden und erzeugt die Steuersignale für die abschaltbaren Leistungshalbleiter T1, T2. In jedem Submodul 7 ist ein figürlich nicht dargestellter Submodulspannungssensor vorgesehen. Der Submodulspannungssensor dient zur Erfassung der an dem Kondensator 8 des Submoduls 7 abfallenden Kondensatorspannung unter Gewinnung eines Kondensatorspannungswertes Uc als Submodulistwert. Der Kondensatorspannungswert Uc wird der jeweiligen Ansteuereinheit, hier 9p1, zur Verfügung gestellt. Die Ansteuereinheit 9p1 erhält somit die Kondensatorspannungswerte sämtlicher Submodule 7 des ihr zugeordneten Phasenmodulzweiges 6p1 und summiert diese zum Erhalt eines Zweigenergieistwertes Uc∑p1, der ebenfalls dem Phasenmodulzweig 6p1 zugeordnet ist. Darüber hinaus ermittelt jede Auswerteeinheit 9p einen Submodulistwert. Der Submodulistwert wird aus der Summe der aktiven Submodule berechnet, an deren Ausgangsklemmen X1 und X2 die Kondensatorspannung Uc abfällt. Inaktive Submodule 7, an deren Ausgangsklemmen X1, X2 die Spannung null abfällt, werden bei der Bildung des Submodulistwertes nicht berücksichtig. Insbesondere der Zweigenergieistwert Uc∑p1 wird der Stromregeleinheit 10 zugeführt.

Im Übrigen ist die Stromregeleinheit 10 mit verschiedenen figürlich nicht dargestellten Messsensoren verbunden. So dienen wechselspannungsseitig der Phasenmodule 2a, 2b, 2c angeordnete Stromwandler zum Erzeugen und Zuführen von Phasenstrommesswerten I1, I2, I3 und an jedem Phasenmodul angeordnete Stromwandler zum Erzeugen und Zuführen von Phasenmodulzweigstrommesswerten Izwg sowie ein im Gleichspannungskreis des Stromrichters angeordnete Stromwandler zum Bereitstellen von Gleichstrommesswerten Id. Spannungswandler des Wechselstromnetzes stellen Phasenspannungsmesswerte der Phasenspannungen U1, U2, U3 und Gleichspannungswandler positive Gleichspannungsmesswerte der positiven Gleichspannung Udp und negative Gleichspannungsmesswerte der negativen Gleichspannung Udn bereit, wobei die positiven Gleichspannungsmesswerte Udp, einer zwischen dem positiven Gleichspannungsanschluss p und Erde abfallenden Gleichspannung und die negativen Gleichspannungsmesswerte Udn, einer zwischen dem negativen Gleichspannungsanschluss und Erde abfallenden Spannung entsprechen. Die negative Gleichspannung ist negativ. Die positive Gleichspannung ist positiv.

Der Stromregeleinheit 10 werden ferner Sollwerte zugeführt. In dem in Figur 3 gezeigten Ausführungsbeispiel werden der Regelungseinheit 10 ein Wirkstromsollwert Ipref sowie ein Blindstromsollwert Iqref zugeführt. Ferner wird ein Gleichspannungssollwert Udref an den Eingang der Stromregeleinheit 10 gelegt. Statt des Gleichspannungssollwertes Udref kann auch ein Gleichstromsollwert Idref für die weitere Regelung verwendet werden. Diese beiden Sollwerte sind somit gegeneinander austauschbar.

Die Sollwerte Ipref, Iqref und Udref sowie die besagten Messwerte treten unter Einsatz verschiedener Regler in Wechselwirkung miteinander, wobei für jede Ansteuereinheit 9p1, 9p2, 9p3, 9n1, 9n2 und 9n3 ein Zweigspannungssollwert Up1ref, Up2ref, Up3ref, Un1ref, Un2ref, Un3ref erzeugt wird. Jede Ansteuereinheit 9 erzeugt Steuersignale für die ihr zugeordneten Submodule 7, so dass die an der Reihenschaltung der Submodule anfallende Spannung Up1, Up2, Up3, Un1, Un2, Un3 dem jeweiligen Zweigspannungssollwert Up1ref, Up2ref, Up3ref, Un1ref, Un2ref, Un3ref möglichst entspricht. Die Spannung Up1, Up2, Up3, Un1, Un2, Un3 wird als Submodulsummenistwert bezeichnet.

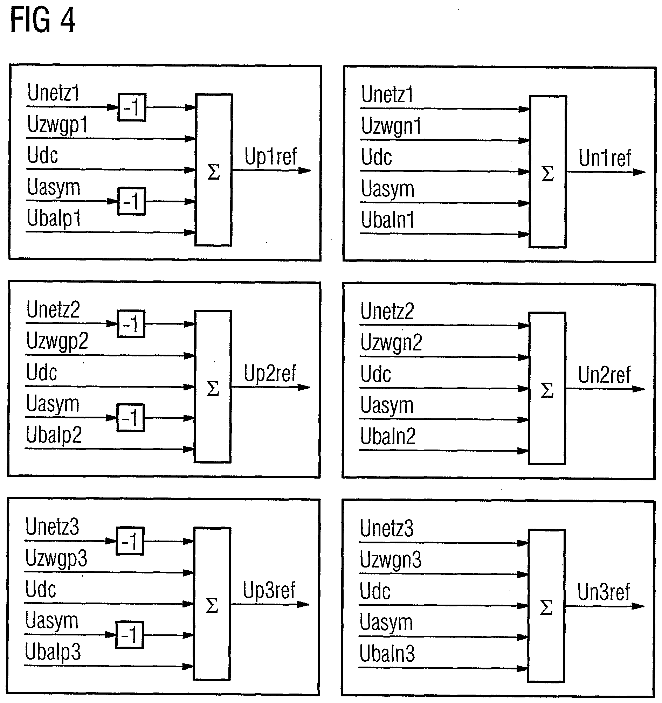

Die übrigen Figuren verdeutlichen wie die Stromregeleinheit 10 aus ihren Eingangswerten geeignete Zweigspannungssollwerte Up1ref, Up2ref, Up3ref, Un1ref, Un2ref, Un3ref bildet. So zeigt Figur 4, dass beispielsweise der Zweigspannungssollwert Uplref durch Linearkombination eines Netzphasenspannungssollwertes Unetz1, eines Zweigspannungszwischensollwertes Uzwgp1, eines Gleichspannungssollwertes Udc, eines Symmetrierungsspannungssollwertes Uasym und eines Balancierungsspannungssollwertes Udalpl berechnet wird. Dies erfolgt für jeden der Phasenmodulzweige 6p1, 6p2, 6p3, 6n1, 6n2, 6n3 unabhängig voneinander.

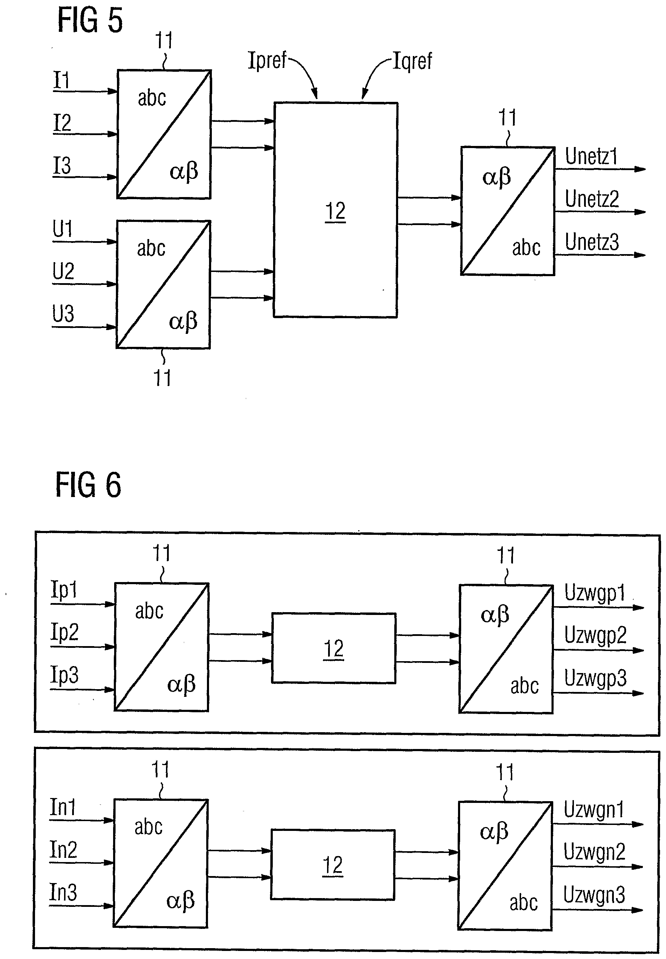

Figur 5 verdeutlicht, wie die Netzphasenspannungssollwerte Unetz1, Unetz2 und Unetz3 aus den Phasenstrommesswerten I1, I2 und I3 und aus den Phasenspannungsmesswerten U1, U2, U3 bestimmt werden. Da die Phasenstrommesswerte in Summe Null ergeben, können die Phasenstrommesswerte I1, I2, I3 der drei Phasen in ein zweiphasiges Vektorsystem α, β projiziert werden. Dies erfolgt mittels der Umwandlungseinheit 11. Entsprechendes gilt für die Phasenspannungsmesswerte U1, U2, U3. Anschließend werden die Messwerte einem Regler 12 zugeführt, der in Abhängigkeit des Wirkstromsollwertes Ipref sowie in Abhängigkeit eines Blindstromsollwertes Iqref die Netzphasenspannungssollwerte Unetz1, Unetz2, Unetz3 erzeugt, wobei wieder eine Umwandlungseinheit 11 zum Überführen der zweidimensionalen Netzphasenspannungssollwerte in dreidimensionale Netzphasenspannungsollwerte dient.

Figur 6 zeigt wie die in Figur 4 erstmals benannten Zweigspannungszwischensollwerte Uzwgp1, Uzwgp2 und Uzwgp3 beziehungsweise Uzwgnl, Uzwgn2 und Uzwgn3 gebildet werden. Dies erfolgt ausgehend von erweiterten Zweigstromwerten Ip1, Ip2, Ip3, In1, In2, In3, deren Bestimmung nachfolgend beschrieben wird. Die sechs erweiterten Zweigstromwerte Ip1, Ip2, Ip3, In1, In2, In3 werden wieder durch eine Umwandlungseinheit 11, wie zuvor beschrieben, in vier erweiterte zweidimensionale Zweigstromwerte a, β umgewandelt. Anschließend sorgt jeweils ein Regler 12, bei dem es sich hier um einen einfachen Proportionalregler handelt, gemeinsam mit der Umwandlungseinheit 11 für die Umwandlung in so genannten Zweigspannungszwischensollwerte Uzwgp1, Uzwgp2 und Uzwgp3 beziehungsweise Uzwgnl, Uzwgn2 und Uzwgn3.

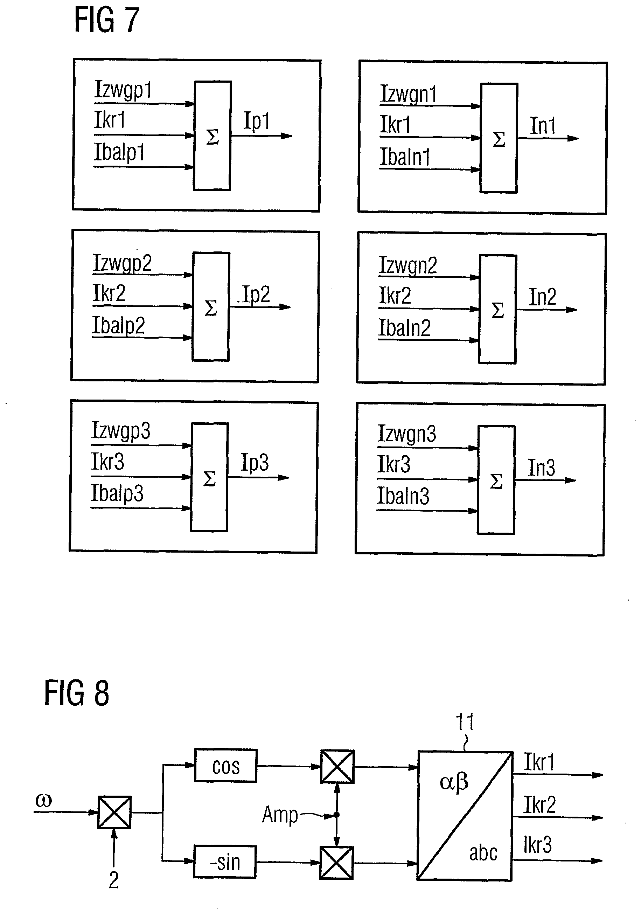

Die Ermittlung der erweiterten Zweigstromwerte Ip1, Ip2, Ip3, In1, In2, In3 ist in Figur 7 verdeutlicht. Die erweiterten Zweigstromwerte Ip1, Ip2, Ip3, In1, In2, In3 bezogen auf den Phasenmodulzweig 6p1 sind nichts anderes als die Summe aus von einem Stromwandler gebildeten Phasenmodulzweigstrommesswerten Izwgp1, einem Kreisstromsollwert Ikr1 und einem Symmetrierungsstromsollwert Ibal1. Die Kreisstromsollwerte Ikr1, Ikr2 und Ikr3 können über eine figürlich nicht dargestellte Leitstelle dynamisch vorgegeben werden. Entsprechendes gilt für die Symmetrierungsstromsollwerte Ibalp1, Ibalp2 und Ibalp3. Jeder erweiterte Zweigstromwert Ip1 umfasst somit sowohl Mess- als auch Sollwerte. Über die Symmetrierungssollwerte ist eine symmetrische Verteilung der in den Phasenmodulzweigen jeweils gespeicherten Energie bereitgestellt.

Figur 8 zeigt ein vorteilhaftes Beispiel zur Erzeugung geeigneter Kreisstromsollwerte Ikr1, Ikr2, Ikr3. Zunächst wird die Kreisfrequenz der Netzspannung ω mit einem Faktor 2 multipliziert. Anschließend wird der Kosinus beziehungsweise der negative Sinus des Argumentes 2ω gebildet und anschließend mit einer Amplitude Amp multipliziert. Anschließend wird aus den beiden Größen unter Einsatz einer Umwandlungseinheit 11 für jedes der drei Phasenmodule ein jeweiliger Kreisstromsollwert Ikr1, Ikr2, Ikr3 bestimmt.

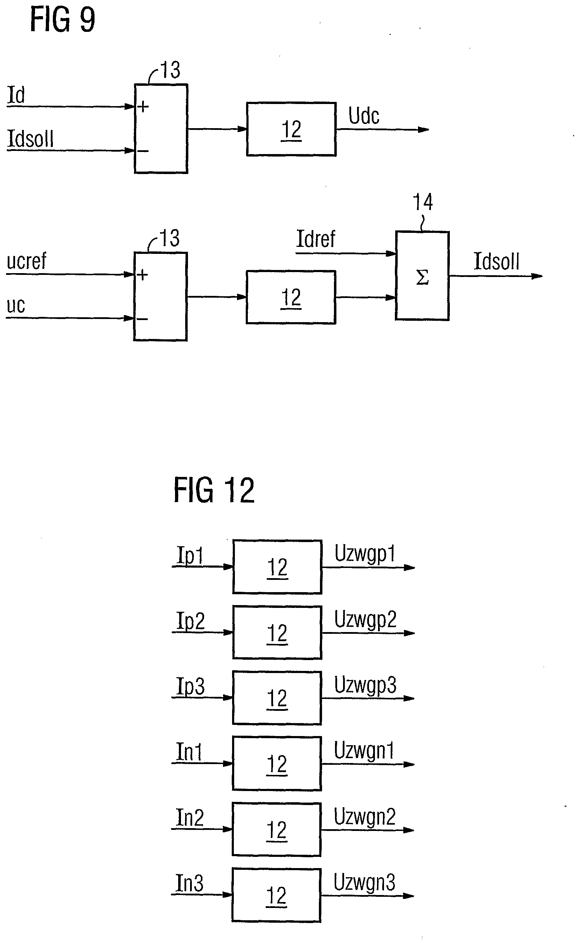

Figur 9 verdeutlicht die Ermittlung des Gleichspannungssollwertes Udc. Udc wird ausgehend von einem gemessenen Gleichstromwert Id und einem Referenzgleichstromwert Idsoll bestimmt, wobei die Ermittlung des Referenzgleichstromwertes Idsoll nachfolgend beschrieben werden wird. Zunächst wird aus dem gemessenen Gleichstromwert Id und dem Referenzgleichstromwert Idsoll die Differenz gebildet. Die Differenz wird anschließend einem Proportionalregler oder einem proportional/integral also PI-Regler 12 zugeführt, an dessen Ausgang der Gleichspannungssollwert Udc abgegriffen werden kann.

Im unteren Teil der Figur 9 ist dargestellt, wie der Referenzgleichstromwert Idsoll ermittelt werden kann. Dies erfolgt zunächst unter Bildung eines Gesamtenergiemesswertes uc, der gleich der Summe aller Kondensatorspannungswerte Uc der erfindungsgemäßen Vorrichtung 1 ist. Der Gesamtenergiemesswert uc stellt daher ein Maß für die in dem jeweiligen Stromrichter gespeicherten Energie dar. Ein solches Maß lässt sich auf beliebige andere Weise herleiten. Um die besagte Energie nicht zu groß werden zu lassen, wird der Gesamtenergiemesswert uc mit einem Summenspannungssollwert ucref verglichen, indem die Differenz durch einen Differenzbildner 13 gebildet wird. Die besagte Differenz wird anschließend einem Regler 12 zugeführt, an dessen Ausgang ein Gesamtenergieabweichungsstromwert ablesbar ist, der einem Summenbilder 14 zugeführt wird. Der Summenbildner 14 bildet die Summe aus dem Gesamtenergieabweichungsstromwert und einem der Stromregeleinheit bekannten Gleichstromsollwert Idref unter Gewinnung des Referenzgleichstromsollwertes Idsoll. Durch diese Bestimmung des Gleichspannungssollwertes Udc kann daher die Regelung das Speichern einer zu hohen Energie in den Kondensatoren 8 des Stromrichters 1 vermeiden.

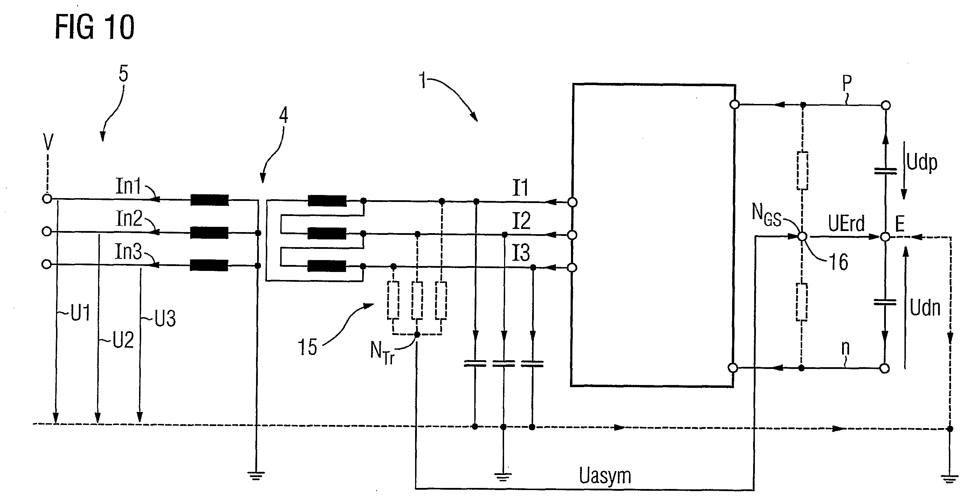

Figur 10 verdeutlicht physikalisch die Bedeutung einer Asymmetriespannung Uasym. In Figur 10 ist in gestrichelten Linien wechselspannungsseitig der Phasenmodule der erfindungsgemäßen Vorrichtung 1 ein Sternpunktbildner 15 gezeigt. Im Gleichspannungskreis p,n ist ebenso in gestrichelten Linien ein Spannungsteiler 16 erkennbar, der beidseitig des Potenzialpunktes N_{GS} den gleichen Widerstand aufweist. Die Asymmetriespannung Uasym ist die zwischen dem Sternpunkt N_{TR} des Sternpunktbildners 15 und dem Potenzialpunkt N_{GS} abfallende Spannung. Diese wird zunächst durch Messen der zwischen der positiven Gleichspannung p und Erde abfallenden Spannung unter Gewinnung eines positiven Gleichspannungswertes Udp und durch Messen der zwischen dem negativen Pol der Gleichspannung und Erde abfallenden Spannung unter Gewinnung eines negativen Gleichspannungswertes Udn ermittelt. Anschließend wird die Differenz der Beträge des negativen Gleichspannungswertes Udn und des positiven Gleichspannungswertes Udp gebildet, woraus sich eine Gleichspannungsdifferenz ΔUd ergibt. Die Gleichspannungsdifferenz ΔUd wird an den Eingang eines Reglers gelegt, wobei dem Regler ferner eine Gleichspannungssolldifferenz vorgegeben wird, so dass am Ausgang des Reglers ein Wert erzeugt ist, mit dem die Regelung die Differenz zwischen Gleichspannungsdifferenz und Gleichspannungssolldifferenz minimiert. Am Ausgang des Reglers kann die Symmetrierungssollspannung Uasym abgegriffen und gemäß der in Figur 4 verdeutlichten Linearkombination anderen SpannungszwischenSollwerten aufgeschaltet werden.

Die Balancierungsspannungssollwerte Ubalpl, Ubalp2, Ubalp3, Ubaln1, Ubaln2 und Ubaln3 werden wie folgt ermittelt: Zunächst werden die Kondensatorspannungswerte Uc durch Messen der an den Kondensatoren der Submodule 7 abfallenden Spannung ermittelt und unter Gewinnung von Zweigenergieistwerten Uc∑p1, Uc∑p2, Uc∑p3, Uc∑n1, Uc∑n2, Uc∑n3 aufsummiert. Hierbei werden alle Submodule des jeweiligen Phasenmodulzweiges berücksichtig und zwar unabhängig davon, ob das jeweilige Submodul zugeschaltet ist oder nicht. Der Zweigenergieistwert ist somit ein Maß der in dem Phasenmodul gespeicherten Energie. Die Zweigenergieistwerte sind daher jeweils einem Phasenmodulzweig 9p1, 9p2, 9p3, 9n1, 9n2 und 9n3 zugeordnet. Die Zweigenergieistwerte Uc∑p1, Uc∑p2, Uc∑p3, Uc∑n1, Uc∑n2, Uc∑n3 werden miteinander verglichen und aus dem Vergleich ein Wert abgeleitet. Dieser Wert wird anschließend mit einem Sollwert an einen Regler übertragen, an dessen Ausgang die Balancierungsspannungssollwerte Ubalpl, Ubalp2, Ubalp3, Ubaln1, Ubaln2 und Ubaln3 abgegriffen werden können.

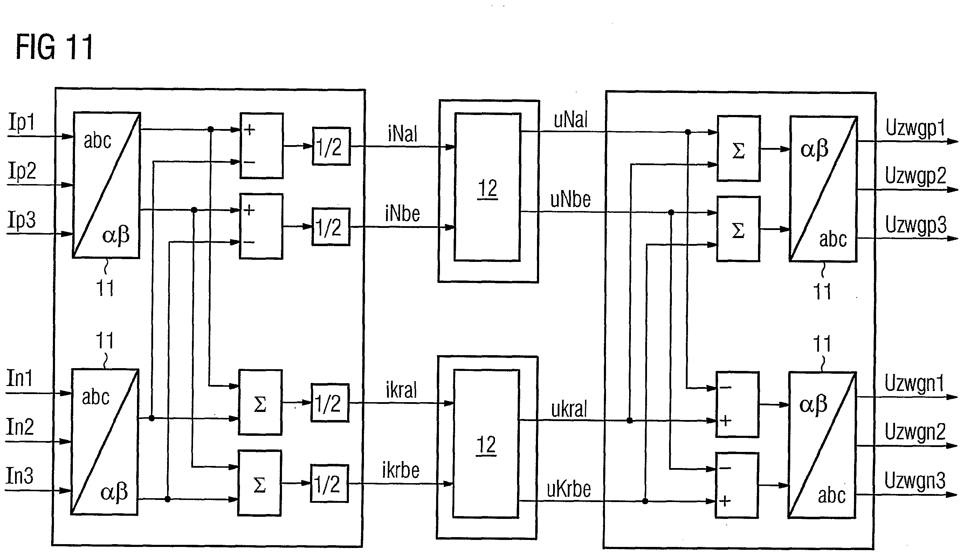

Figur 11 zeigt eine weitere Möglichkeit zur Ermittlung der Zweigspannungszwischensollwerte Uzwgp1, Uzwgp2 und Uzwgp3 ausgehend von den erweiterten Zweigstromwerten Ip1, Ip2, Ip3 und In1, In2 und In3. Zunächst werden die erweiterten Zweigstromwerte Ip1, Ip2, Ip3 und In1, In2 und In3 durch Umwandlungseinheiten 11 von einem dreidimensionalen Vektorraum in einen zweidimensionalen Vektorraum α,β überführt. Anschließend wird die Regelung für einen Netzstromanteil und einen Kreisstromanteil unabhängig voneinander durchgeführt. So werden durch geeignete Linearkombinationen Netzstromanteile iNal und der Netzstromanteil iNbe gebildet und einem Regler 12 mit zwei nicht dargestellten Sollwerten zugeführt. Der Regler 12 bildet an seinem Ausgang für den Netzstromanteil einen α-Wert uNal beziehungsweise einen β-Wert uNbe. Für den Kreisstromanteil erfolgt die Regelung entsprechend. Man erhält Kreisstromwerte ikral und ikrbe, wobei am Ausgang des in Figur 11 unten dargestellten Reglers 12 Netzspannungskreisanteile ukral und ukrbe abgegriffen werden können. Durch geeignete Linearkombination und Umwandlung in den dreiphasigen Raum erhält man die Zweigspannungszwischensollwerte Uzwgp1 bis Uzwgn3.

Abweichend zu dem in Figur 11 vorgeschlagenen Verfahren können die Zweigspannungszwischensollwerte Uzwgp1 bis Uzwgn3 ausgehend von den erweiterten Stromwerten Ip1, Ip2 und Ip3 auch unabhängig voneinander ermittelt werden. Hierzu ist - wie in Figur 12 verdeutlich ist - für jeden erweiterten Zweigstromwert Ip1 bis In3 ein separater Regler 12 vorgesehen, wobei die erweiterten Zweigstromwerte Ip1 bis In3 wie oben ausgeführt ermittelt wurden. Bei dem Regler 12 handelt es sich beispielsweise um einen Proportionalregler.

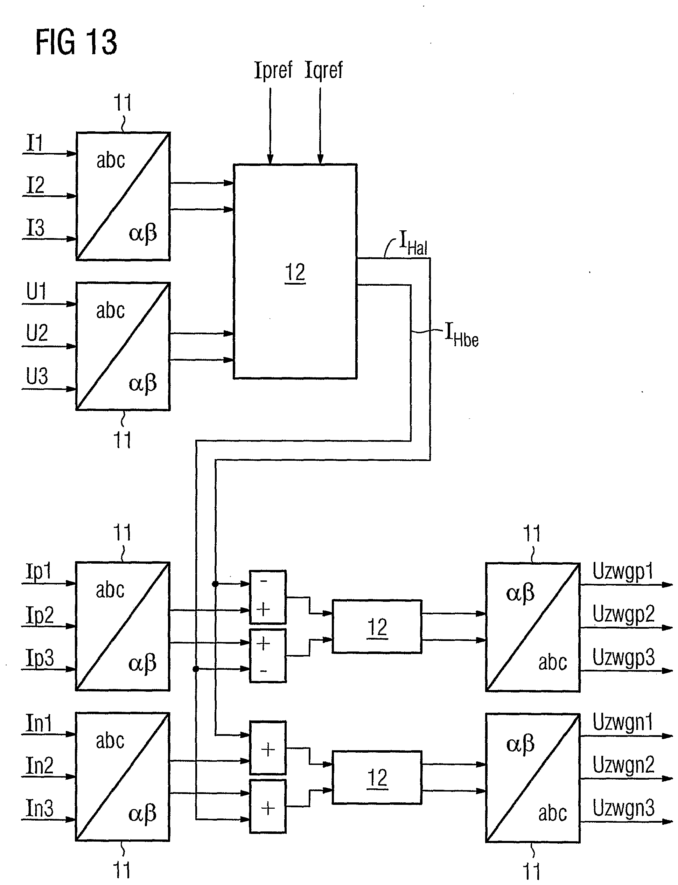

Figur 13 zeigt ein weiteres Verfahren zur Ermittlung der Zweigspannungszwischensollwerte Uzwgp1,...,Uzwgn3. Zunächst werden die Phasenstrommesswerte I1, I2 und I3 und Phasenspannungsmesswerte U1, U2 und U3 vom Dreiphasenraum in ein Zweiphasenraum α,β überführt und die jeweiligen umgewandelten Messwerte einem Vektorregler 12 zugeführt. Dem Regler 12 werden ferner ein Wirkstromsollwert Ipref sowie der Blindstromsollwert Iqref zugeführt. Der Vektorregler 12 erzeugt an seinem Ausgang Hilfsstromwerte IHal und IHbe nach der Maßgabe, dass die Differenz zwischen dem Wirkstromsollwert und dem aus den Messwerten ermittelten Wirkstrommesswert und gleichzeitig die Differenz aus Blindstrommesswerten und dem Blindstromsollwert minimal wird. Die Hilfsstromwerte IHal, IHbe werden anschließend, wie in Figur 13 angedeutet, linear mit erweiterten Zweigstromwerten Ip1,...,Ip3 kombiniert. Die erweiterten Zweigstromwerte Ip1 bis In3 umfassen, wie bereits ausgeführt wurde, Sollstromwerte, mit denen der Regler 12 zweidimensionale Zweigspannungswerte α,β und die Umwandlungseinheit 11 schließlich dreiphasige Zweigspannungszwischensollwerte Uzwgp1 bis Uzwgp3 erzeugt.

## Patentansprüche

1. Vorrichtung (1) zum Umrichten eines elektrischen Stromes
- mit wenigstens einem Phasenmodul (2a,2b,2c), das einen Wechselspannungsanschluss (3₁,3₂,3₃) und wenigstens einen Gleichspannungsanschluss (p,n) aufweist, wobei zwischen jedem Gleichspannungsanschluss (p,n) und jedem Wechselspannungsanschluss (3₁,3₂,3₃) ein Phasenmodulzweig (6p1,6p2,6p3,6n1,6n2,6n3) ausgebildet ist, und wobei jeder Phasenmodulzweig (6p1,6p2,6p3,6n1,6n2,6n3) über eine Reihenschaltung aus Submodulen (7) verfügt, die jeweils einen Kondensator (8) und wenigstens zwei Leistungshalbleiter (T1,T2) aufweisen,
- mit Messsensoren zum Bereitstellen von Istwerten und
- mit Regelungsmitteln (9,10), die mit den Messsensoren verbunden und zum Regeln der Vorrichtung (1) in Abhängigkeit der Istwerte und vorgegebener Sollwerte eingerichtet sind, **dadurch gekennzeichnet, dass** die Regelungsmittel (9,10) eine Stromregeleinheit (10) und jeweils einem Phasenmodulzweig zugeordnete Ansteuereinheiten aufweisen, wobei die Stromregeleinheit (10) zum Bereitstellen von Zweigspannungssollwerten für die Ansteuereinheiten (9) eingerichtet ist und die Ansteuereinheiten zwischen die Submodule (7) und die Stromregeleinheit (10) geschaltet und zur Erzeugung von Steuersignalen für die besagten Submodule eingerichtet sind,
- wobei die Ansteuereinheiten Kondensatorspannungswerte sämtlicher Submodule des ihr zugeordneten Phasenmodulzweiges als Submodul-Istwerte erhalten, diese Submodul-Istwerte zum Erhalt eines Zweigenergieistwertes summieren und den Zweigenergieistwert der Stromregeleinheit zuführen,
- wobei die Ansteuereinheiten von der Stromregeleinheit einen Zweigspannungssollwert erhalten,
- und wobei die Ansteuereinheiten Steuersignale für die ihnen zugeordneten Submodule erzeugen derart, dass die an der Reihenschaltung dieser Submodule anfallende Spannung dem jeweiligen Zweigspannungssollwert möglichst entspricht.

2. Vorrichtung (1) nach Anspruch 1,
**dadurch gekennzeichnet, dass** jedes Submodul (7) über einen Submodulsensor verfügt, der mit der dem Submodul (7) zugeordneten Ansteuereinheit (9) verbunden ist und einen der Submodul-Istwerte bereitstellt, der ein Kondensatorspannungswert (Uc) ist, der einer an dem Kondensator (8) des jeweiligen Submoduls (7) abfallenden Spannung entspricht.

3. Vorrichtung (1) nach einem der vorhergehenden Ansprüche,
**dadurch gekennzeichnet, dass** jede Ansteuereinheit (9) mit allen Submodulsensoren des ihr zugeordneten Phasenmodulzweiges (6p1,6p2,6p3,6n1,6n2,6n3) verbunden ist und zum Bereitstellen eines Summen-Istwertes für die Stromregeleinheit eingerichtet ist, wobei der Summen-Istwert die Summe aller Submodul-Istwerte des jeweiligen Phasenmodulzweiges (6p1,6p2,6p3,6n1,6n2,6n3) ist.

4. Vorrichtung (1) nach einem der vorhergehenden Ansprüche,
**dadurch gekennzeichnet, dass** die Stromregeleinheit (10) zum Bereitstellen des Zweigspannungssollwertes (Up1ref) für jede Ansteuereinheit (9) eingerichtet ist.

5. Vorrichtung (1) nach einem der vorhergehenden Ansprüche,
**dadurch gekennzeichnet, dass** die Messsensoren Zweigstromsensoren umfassen, die zum Messen von Phasenzweigströmen (Izwg) eingerichtet sind, die in den Phasenmodulzweigen (6p1,6p2,6p3,6n1,6n2,6n3) fließen.

6. Vorrichtung (1) nach einem der vorhergehenden Ansprüche,
**dadurch gekennzeichnet, dass** die Stromregeleinheit (10) zum Regeln der Phasenzweigströme (Izwg) eingerichtet ist.

7. Vorrichtung (1) nach einem der vorhergehenden Ansprüche,
**dadurch gekennzeichnet, dass** die Sollwerte einen Blindstrom-Sollwert (Iqref) und einen Wirkstrom-Sollwert (Ipref) und/oder einen Gleichstrom-Sollwert (Id) umfassen.

8. Verfahren zum Umrichten eines Stromes mittels eines Umrichters (1), der wenigstens ein Phasenmodul (2a,2b,2c) mit wenigstens einem Gleichspannungsanschluss (p,n) und einem Wechselspannungsanschluss (3₁,3₂,3₃) aufweist, wobei zwischen jedem Gleichspannungsanschluss und dem Wechselspannungsanschluss ein Phasenmodulzweig (6p1,6p2,6p3,6n1,6n2,6n3) ausgebildet ist, der eine Reihenschaltung aus Submodulen (7) aufweist, die jeweils einen Kondensator (8) und wenigstens zwei Leistungshalbleiter (T1,T2) aufweisen, bei dem eine Stromregeleinheit (10) mit Istwerten und mit Sollwerten versorgt wird, von der Stromregeleinheit (10) in Abhängigkeit der Istwerte und der Sollwerte mittels Regler Zweigspannungssollwerte bestimmt werden, die jeweils einem Phasenmodulzweig (6p1,6p2,6p3,6n1,6n2,6n3) zugeordnet sind, die Zweigspannungssollwerte jeweils einer Ansteuereinheit (9) zugeführt werden, und von jeder Ansteuereinheit (9) in Abhängigkeit der Zweigspannungssollwerte Steuersignale für die ihr zugeordneten Submodule (7) erzeugt werden derart, dass die an der Reihenschaltung dieser Submodule anfallende Spannung dem jeweiligen Zweigspannungssollwert möglichst entspricht,
wobei die Ansteuereinheiten Kondensatorspannungswerte sämtlicher Submodule des ihr zugeordneten Phasenmodulzweiges als Submodul-Istwerte erhalten, von den Ansteuereinheiten diese Submodul-Istwerte zum Erhalt eines Zweigenergieistwertes summiert werden und von den Ansteuereinheiten der Zweigenergieistwert der Stromregeleinheit zugeführt wird.

9. Verfahren nach Anspruch 8,
**dadurch gekennzeichnet, dass** die Istwerte Zweigenergieistwerte umfassen, die von den Ansteuereinheiten (9) zur Stromregeleinheit (10) übertragen werden, wobei die Zweigenergieistwerte durch Aufsummieren von den in den Submodulen erfassten Submodul-Istwerten gebildet werden.

10. Verfahren nach einem der Ansprüche 8 bis 9,
**dadurch gekennzeichnet, dass** die Zweigspannungssollwerte durch eine Linearkombination von Spannungs-Zwischensollwerten gebildet werden, wobei die Spannungs-Zwischensollwerte einen Gleichspannungs-Sollwert (Udc) umfassen, wobei der Gleichspannungs-Sollwert (Udc) in Abhängigkeit der Differenz zwischen einem vorgegebenen Referenzgleichstromwert (Idsoll) und einem durch Messung gewonnenen Gleichstrommesswert (Id) bestimmt wird.

11. Verfahren nach Anspruch 10,
**dadurch gekennzeichnet, dass** eine Gesamtspannungsdifferenz durch Bilden der Differenz zwischen einem vorgegebenen Summenspannungs-Sollwert (ucref) und einem durch Aufsummieren der an allen Energiespeichern des Umrichters abfallenden Spannungen ermittelten Gesamtenergiemesswert (uc) ermittelt wird, und die Gesamtspannungsdifferenz einem Regler (12) unter Gewinnung eines Gesamtenergieabweichungsstromwertes zugeführt wird, wobei der Gesamtenergieabweichungsstromwert mit einem Gleichstrom-Sollwert (Idref) unter Gewinnung des Referenzgleichstromwertes (Idsoll) aufsummiert wird.

12. Verfahren nach einem der Ansprüche 10 bis 11,
**dadurch gekennzeichnet, dass** die Spannungs-Zwischensollwerte für jede Ansteuereinheit (9) einen Netzphasenspannungs-Sollwert (Unetzl, Unetz2, Unetz3) umfassen.

13. Verfahren nach Anspruch 12,
**dadurch gekennzeichnet, dass**
die Netzphasenspannungs-Sollwerte (Unetzl, Unetz2, Unetz3) aus Phasenstromwerten (I1, I2, I3), die durch Messen der wechselspannungsseitigen Phasenströme der Phasenmodule (2a,2b,2c) gewonnen werden, in Abhängigkeit von StromSollwerten mittels eines Reglers (12) bestimmt werden.

14. Verfahren nach Anspruch 12,
**dadurch gekennzeichnet, dass**
die Netzphasenspannungs-Sollwerte (Unetzl, Unetz2, Unetz3) in Abhängigkeit von Phasenspannungswerten (U1, U2, U3), die durch Messen der wechselspannungsseitigen Phasenspannungen der Phasenmodule (2a,2b,2c) gewonnen werden, in Abhängigkeit von Sollwerten mittels eines Reglers (12) bestimmt werden.

15. Verfahren nach einem der Ansprüche 10 bis 14,
**dadurch gekennzeichnet, dass**
die Spannungs-Zwischensollwerte für jeden Phasenmodulzweig (6p1,6p2,6p3,6n1,6n2,6n3) einen Zweigspannungszwischen-Sollwert (Uzwgp1,Uzwgp2,Uzwgp3,Uzwgn1,Uzwgn2,Uzwgn3) umfassen, wobei
die Zweigspannungszwischen-Sollwerte (Uzwgp1,Uzwgp2,Uzwgp3,Uzwgn1,Uzwgn2,Uzwgn3) in Abhängigkeit von erweiterten Zweigstromwerten (Ip1,Ip2,Ip3,In1,In2,In3) mittels eines Reglers (12) bestimmt werden, wobei jeder erweiterte Zweigstromwert (Ip1,Ip2,Ip3,In1,In2,In3) durch Bilden der Summe aus einem Phasenmodulzweigstrommesswert (Izwgp1,Izwgp2,Izwgp3,Izwgn1,Izwgn2,Izwgn3), der durch Erfassen eines in dem jeweiligen Phasenmodulzweig (6p1,6p2,6p3,6n1,6n2,6n3) fließenden Phasenmodulzweigstromes gewonnen wird, aus festgelegten Kreisstrom-Sollwerten (Ikr1,Ikr2,Ikr3) und aus festgelegten SymmetrierungsstromSollwerten (Ibalp1,Ibalp2,Ibalp3, Ibaln1,Ibaln2,Ibaln3) berechnet wird, wobei die Symmetrierungsstrom-Sollwerte (Ibalp1,Ibalp2,Ibalp3, Ibaln1,Ibaln2,Ibaln3) in Abhängigkeit der Zweigenergieistwerte der Phasenmodulzweige (6p1,6p2,6p3,6n1,6n2,6n3) bestimmt werden, und wobei die Kreisstrom-Sollwerte zum Festlegen von Kreisströmen, die Anteile von Phasenmodulzweigströmen sind, dienen.

16. Verfahren nach Anspruch 15,
**dadurch gekennzeichnet, dass** die Zweigspannungszwischen-Sollwerte eine Asymmetrie-Sollspannung (Uasym) aufweisen, wobei
die Asymmetrie-Sollspannung (Uasym)
- durch Messen der Spannung zwischen einem positiven Gleichstromanschluss (p) und Erde unter Gewinnung eines positiven Gleichspannungswertes (Udp) und durch Messen der Spannung zwischen einem negativen Gleichspannungsanschlusses (n) und Erde unter Gewinnung eines negativen Gleichspannungswertes (Udn),
- durch Bilden der Differenz der Beträge des positiven und des negativen Gleichspannungswertes unter Gewinnung einer Gleichspannungsdifferenz (Δud), und
- durch Anlegen der Gleichspannungsdifferenz (Δud) an den Eingang eines Reglers unter Gewinnung der Asymmetrie-Sollspannung (Uasym) am Ausgang des Reglers festgelegt wird.

17. Verfahren nach Anspruch 15,
**dadurch gekennzeichnet, dass** zur Bestimmung der Zweigspannungszwischen-Sollwerte (Uzwgp1,...Uzwgn3) erweiterte Zweigstromwerte (Ip1,Ip2,Ip3,In1,In2,In3) als Eingangsgrößen der Regelung in einen Netzstromanteil und einen Kreisstromanteil zerlegt werden.

18. Verfahren nach Anspruch 15,
**dadurch gekennzeichnet, dass** jeder erweiterte Zweigstromwert (Ip1,Ip2,Ip3,In1,In2,In3) unabhängig von restlichen Zweigstromwerten (Ip1,Ip2,Ip3,In1,In2,In3) geregelt wird.

19. Verfahren nach Anspruch 15,
**dadurch gekennzeichnet, dass** durch Messen der wechselspannungsseitigen Phasenströme Phasenstromwerte (I1,I2,I3) und durch Messen der wechselspannungsseitigen Phasenspannungen der Phasenmodulzweige Phasenspannungswerte (U1,U2,U3) gewonnen werden, aus den Phasenstromwerten (I1,I2,I3) und den Phasenspannungswerten (U1,U2,U3) in Abhängigkeit von Sollwerten mittels eines Reglers Hilfsstromwerte (IHal,IHbe) bestimmt werden, die Hilfsstromwerte (IHal,IHbe) zu den erweiterten Zweigstromwerten (Ip1,Ip2,Ip3,In1,In2,In3) unter Gewinnung von Hilfssummen oder Hilfsdifferenzen hinzuaddiert beziehungsweise von diesen abgezogen werden, wobei die Hilfssummen und/oder Hilfsdifferenzen an den Eingang eines Reglers (12) gelegt werden, wobei am Ausgang des besagten Reglers (12) die Zweigspannungszwischen-Sollwerte (Uzwgp1,Uzwgp2,Uzwgp3,Uzwgn1,Uzwgn2,Uzwgn3) abgegriffen werden.

## Claims

1. Apparatus (1) for conversion of an electric current
- having at least one phase module (2a, 2b, 2c) which has an AC voltage connection (3₁, 3₂, 3₃) and at least one DC voltage connection (p, n) with a phase module branch (6p1, 6p2, 6p3, 6n1, 6n2, 6n3) being formed between each DC voltage connection (p, n) and each AC voltage connection (3₁, 3₂, 3₃) and with each phase module branch (6p1, 6p2, 6p3, 6n1, 6n2, 6n3) having a series circuit of submodules (7) which each have a capacitor (8) and at least two power semiconductors (T1, T2),
- having measurement sensors for provision of actual values, and
- having regulation means (9, 10) which are connected to the measurement sensors and are designed to regulate the apparatus (1) as a function of the actual values and predetermined nominal values,
**characterized in that**
the regulation means (9, 10) have a current regulation unit (10) and drive units which are each associated with one phase module branch, with the current regulation unit (10) being designed to provide branch voltage nominal values for the drive units (9), and with the drive units being connected between the submodules (7) and the current regulation unit (10) and being designed to produce control signals for said submodules,
- with the drive units obtaining capacitor voltage values of all submodules of the phase module branch assigned thereto as submodule actual values, summing said submodule actual values to obtain a branch energy actual value and feeding the branch energy actual value to the current regulation unit,
- with the drive units obtaining a branch voltage nominal value from the current regulation unit,
- and with the drive units generating control signals for the submodules assigned thereto in such a way that the voltage across the series circuit of said submodules corresponds as closely as possible to the respective branch voltage nominal value.

2. Apparatus (1) according to Claim 1,
**characterized in that**
each submodule (7) has a submodule sensor which is connected to the drive unit (9) associated with that submodule (7) and provides one of the submodule actual values which is a capacitor voltage value (Uc), which corresponds to a voltage across the capacitor (8) of the respective submodule (7).

3. Apparatus (1) according to one of the preceding claims,
**characterized in that**
each drive unit (9) is connected to all the submodule sensors of the phase module branch (6p1, 6p2, 6p3, 6n1, 6n2, 6n3) associated with it and is designed to provide a sum actual value for the current regulation unit, with the sum actual value being the sum of all the submodule actual values of the respective phase module branch (6p1, 6p2, 6p3, 6n1, 6n2, 6n3).

4. Apparatus (1) according to one of the preceding claims,
**characterized in that**
the current regulation unit (10) is designed to provide the branch voltage nominal value (Uplref) for each drive unit (9).

5. Apparatus (1) according to one of the preceding claims,
**characterized in that**
the measurement sensors comprise branch current sensors which are designed to measure phase branch currents (Izwg) which are flowing in the phase module branches (6p1, 6p2, 6p3, 6n1, 6n2, 6n3) .

6. Apparatus (1) according to one of the preceding claims,
**characterized in that**
the current regulation unit (10) is designed to regulate the phase branch currents (Izwg).

7. Apparatus (1) according to one of the preceding claims,
**characterized in that** the nominal values comprise a reactive current nominal value (Iqref) and an in-phase current nominal value (Ipref), and/or a DC nominal value (Id).

8. Method for conversion of a current by means of a converter (1) which has at least one phase module (2a, 2b, 2c) with at least one DC voltage connection (p, n) and an AC voltage connection (3₁, 3₂, 3₃), with a phase module branch (6p1, 6p2, 6p3, 6n1, 6n2, 6n3) being formed between each DC voltage connection and the AC voltage connection and having a series circuit of submodules (7) which each have a capacitor (8) and at least two power semiconductors (T1, T2), in which a current regulation unit (10) is supplied with actual values and with nominal values, the current regulation unit (10) defines branch voltage nominal values as a function of the actual values and the nominal values by means of a regulator, which branch voltage nominal values are respectively associated with one phase module branch voltage (6p1, 6p2, 6p3, 6n1, 6n2, 6n3), the branch voltage nominal values are each supplied to a drive unit (9), and each drive unit (9) produces control signals for the submodules (7) associated with it, as a function of the branch voltage nominal values, in such a way that the voltage across the series circuit of said submodules corresponds as closely as possible to the respective branch voltage nominal value,
with the drive units obtaining capacitor voltage values of all submodules of the phase module branch assigned thereto as submodule actual values, said submodule actual values being summed by the drive units to obtain a branch energy actual value, and the branch energy actual value being fed to the current regulation unit by the drive units.

9. Method according to Claim 8,
**characterized in that**
the actual values comprise branch energy actual values which are transmitted by the drive units (9) to the current regulation unit (10), with the branch energy actual values being formed by addition of the submodule actual values detected in the submodules.

10. Method according to either of Claims 8 and 9,
**characterized in that**
the branch voltage nominal values are formed by a linear combination of voltage intermediate nominal values, with the voltage intermediate nominal values comprising a DC voltage nominal value (Udc), with the DC voltage nominal value (Udc) being determined as a function of the difference between a predetermined reference DC value (Idsoll) and a DC measured value (Id) obtained by measurement.

11. Method according to Claim 10,
**characterized in that**
a total voltage difference is determined by formation of the difference between a predetermined sum voltage nominal value (ucref) and a total energy measured value (uc) which is determined by addition of the voltages across all the energy stores of the converter, and the total voltage difference is supplied to a regulator (12) with a total energy discrepancy current value being obtained, with the total energy discrepancy current value being added to a DC nominal value (Idref), with the reference DC value (Idsoll) being obtained.

12. Method according to one of Claims 10 to 11,
**characterized in that**
the voltage intermediate nominal values for each drive unit (9) comprise a network phase voltage nominal value (Unetzl, Unetz2, Unetz3).

13. Method according to Claim 12,
**characterized in that**
the network phase voltage nominal values (Unetz1, Unetz2, Unetz3) are determined from phase current values (I1, I2, I3), which are obtained by measurement of the phase currents on the AC voltage sides of the phase modules (2a, 2b, 2c) as a function of current nominal values, by means of a regulator (12) .

14. Method according to Claim 12,
**characterized in that**
the network phase voltage nominal values (Unetzl, Unetz2, Unetz3) are determined as a function of phase voltage values (U1, U2, U3), which are obtained by measurement of the phase voltages on the AC voltage sides of the phase modules (2a, 2b, 2c), as a function of nominal values, by means of a regulator (12) .

15. Method according to one of Claims 10 to 14,
**characterized in that**
the voltage intermediate nominal values for each phase module branch (6p1, 6p2, 6p3, 6n1, 6n2, 6n3) comprise a branch voltage intermediate nominal value (Uzwgp1, Uzwgp2, Uzwgp3, Uzwgnl, Uzwgn2, Uzwgn3), with the branch voltage intermediate nominal values (Uzwgp1, Uzwgp2, Uzwgp3, Uzwgnl, Uzwgn2, Uzwgn3) being determined as a function of extended branch current values (Ip1, Ip2, Ip3, In1, In2, In3), by means of a regulator (12), with each extended branch current value (Ip1, Ip2, Ip3, In1, In2, In3) being determined by formation of the sum of a phase module branch current measured value (Izwgp1, Izwgp2, Izwgp3, Izwgn1, Izwgn2, Izwgn3), which is obtained by detection of a phase module branch current flowing in the respective phase module branch (6p1, 6p2, 6p3, 6n1, 6n2, 6n3), of defined circulating-current nominal values (Ikr1, Ikr2, Ikr3) and of defined balancing current nominal values (Ibalp1, Ibalp2, Ibalp3, Ibaln1, Ibaln2, Ibaln3), with the balancing current nominal values (Ibalp1, Ibalp2, Ibalp3, Ibaln1, Ibaln2, Ibaln3) being determined as a function of the branch energy actual values of the phase module branches (6p1, 6p2, 6p3, 6n1, 6n2, 6n3), and with the circulating-current nominal values serving for definition of circulating currents, which are components of phase module branch currents.

16. Method according to Claim 15,
**characterized in that**
the branch voltage intermediate nominal values have an unbalanced nominal voltage (Uasym), with the unbalanced nominal voltage (Uasym)
- being defined by measurement of the voltage between a positive DC connection (p) and ground, with a positive DC voltage value (Udp) being obtained, and by measurement of the voltage between a negative DC voltage connection (n) and ground, with a negative DC voltage value (Udn) being obtained,
- by formation of the difference between the magnitudes of the positive and the negative DC voltage values, with a DC voltage difference (Δud) being obtained, and
- by application of the DC voltage difference (Δud) to the input of a regulator, with the unbalanced nominal voltage (Uasym) being obtained at the output of the regulator.

17. Method according to Claim 15,
**characterized in that**
extended branch current values (Ip1, Ip2, Ip3, In1, In2, In3) are broken down as input variables of the regulation system into a network current component and a circulating current component in order to determine the branch voltage intermediate nominal values (Uzwgp1, ... Uzwgn3).

18. Method according to Claim 15,
**characterized in that**
each extended branch current value (Ip1, Ip2, Ip3, In1, In2, In3) is regulated independently of remaining branch current values (Ip1, Ip2, Ip3, In1, In2, In3).

19. Method according to Claim 15,
**characterized in that**
phase current values (I1, 12, 13) are obtained by measurement of the phase currents on the AC voltage side and phase voltage values (U1, U2, U3) are obtained by measurement of the phase voltages on the AC voltage sides of the phase module branches, auxiliary current values (IHal, IHbe) are determined from the phase current values (I1, 12, 13) and the phase voltage values (U1, U2, U3) as a function of nominal values, by means of a regulator, the auxiliary current values (IHal, IHbe) are added to or subtracted from the extended branch current values (Ip1, Ip2, Ip3, In1, In2, In3), with auxiliary sums or auxiliary differences being obtained, with the auxiliary sums and/or auxiliary differences being applied to the input of a regulator (12), and the branch voltage intermediate nominal values (Uzwgp1, Uzwgp2, Uzwgp3, Uzwgnl, Uzwgn2, Uzwgn3) being tapped off at the output of said regulator (12).

## Revendications

1. Système (1) de conversion d'un courant électrique
- comprenant au moins un module (2a, 2b, 2c) de phase, qui a une borne (3₁, 3₂, 3₃) de tension alternative et au moins une borne (p, n) de tension continue, dans lequel une branche (6p1, 6p2, 6p3, 6n1, 6n2, 6n3) de module de phase est constituée entre chaque borne (p, n) de tension continue et chaque borne (3₁, 3₂, 3₃) de tension alternative et dans lequel chaque branche (6p1, 6p2, 6p3, 6n1, 6n2, 6n3) de module de phase dispose d'un montage en série de sous-modules (7), qui ont chacun un condensateur (8) et au moins deux semi-conducteurs (T1, T2) de puissance,
- comprenant des capteurs de mesure pour mettre à disposition des valeurs réelles et
- comprenant des moyens (9, 10) de régulation, qui sont reliés aux capteurs de mesure et qui sont conçus pour réguler le système (1) en fonction des valeurs réelles et de valeurs de consigne données à l'avance,
**caractérisé en ce que**
les moyens (9, 10) de régulation ont une unité (10) de réglage du courant et des unités d'excitation associées respectivement à une branche de module de phase, l'unité (10) de réglage du courant étant conçue pour mettre des valeurs de consigne de tension de branche à disposition des unités (9) d'excitation et les unités d'excitation étant montées entre les sous-modules (7) et l'unité (10) de réglage du courant et étant conçues pour produire des signaux de commande desdits sous-modules,
- dans lequel les unités d'excitation reçoivent, comme valeurs réelles de sous-module, des valeurs de tension de condensateur de tous les sous-modules de la branche de module de phase qui leur est associée, somment ces valeurs réelles de sous-module pour obtenir une valeur réelle d'énergie de branche et envoient la valeur réelle d'énergie de branche à l'unité de réglage du courant,
- dans lequel les unités d'excitation reçoivent de l'unité de réglage du courant, une valeur de consigne de tension de branche de l'unité de réglage du courant,
- et dans lequel les unités d'excitation produisent des signaux de commande des sous-modules qui leur sont associés, de manière à ce que la tension aux bornes du montage en série de ces sous-modules corresponde autant que possible à la valeur de consigne de tension de branche respective.

2. Système (1) suivant la revendication 1,
**caractérisé en ce que**
chaque sous-module (7) dispose d'un capteur de sous-module, qui est relié à l'unité (9) d'excitation associée au sous-module (7) et qui met à disposition l'une des valeurs réelles de sous-module, qui est une valeur (Uc) de tension de condensateur correspondant à une tension aux bornes du condensateur (8) du sous-module (7) respectif.

3. Système (1) suivant l'une des revendications précédentes,
**caractérisé en ce que**
chaque unité (9) d'excitation est reliée à tous les capteurs de sous-module de la branche (6p1, 6p2, 6p3, 6n1, 6n2, 6n3) de module de phase qui lui est associée et est conçue pour mettre une valeur réelle somme à disposition de l'unité de réglage du courant, la valeur réelle somme étant la somme de toutes les valeurs réelles de sous-modules de la branche (6p1, 6p2, 6p3, 6n1, 6n2, 6n3) de module de phase respective.

4. Système (1) suivant l'une des revendications précédentes,
**caractérisé en ce que**
l'unité (10) de réglage du courant est conçue pour mettre la valeur (Up1ref) de consigne de tension de branche à disposition de chaque unité (9) d'excitation.

5. Système (1) suivant l'une des revendications précédentes,
**caractérisé en ce que**
les capteurs de mesure comprennent des capteurs de courant de branche conçus pour mesurer des courants (Izwg) de branche de phase, qui passent dans les branches (6p1, 6p2, 6p3, 6n1, 6n2, 6n3) de module de phase.

6. Système (1) suivant l'une des revendications précédentes,
**caractérisé en ce que**
l'unité (10) de réglage du courant est conçue pour régler les courants (Izwg) de branche de phase.

7. Système (1) suivant l'une des revendications précédentes,
**caractérisé en ce que**
les valeurs de consigne comprennent une valeur (Iqref) de consigne de courant réactif et une valeur (Ipref) de consigne de courant actif et/ou une valeur (Id) de consigne de courant continu.

8. Procédé de conversion d'un courant au moyen d'un convertisseur (1), qui a au moins un module (2a, 2b, 2c) de phase, ayant au moins une borne (p, n) de tension continue et une borne (3₁, 3₂, 3₃) de tension alternative, dans lequel, entre chaque borne de tension continue et la borne de tension alternative, est constituée une branche (6p1, 6p2, 6p3, 6n1, 6n2, 6n3) de module de phase, qui a un montage en série de sous-modules (7), ayant chacun un condensateur (8) et au moins deux semi-conducteurs (T1, T2) de puissance, dans lequel on alimente une unité (10) de réglage du courant, en valeurs réelles et en valeurs de consigne, on détermine, par l'unité (10) de réglage du courant, en fonction des valeurs réelles et des valeurs de consigne, au moyen d'un régleur, des valeurs de consigne de tension de branche associées respectivement à une branche (6p1, 6p2, 6p3, 6n1, 6n2, 6n3) de module de phase, on envoie les valeurs de consigne de tension de branche respectivement à une unité (9) d'excitation et on produit, par chaque unité (9) d'excitation, en fonction des valeurs de consigne de tension de branche, des signaux de commande des sous-modules (7), qui leur sont associés, de manière à ce que la tension aux bornes du montage en série de ces sous-modules corresponde autant que possible à la valeur de consigne de tension de branche respective,
dans lequel les unités d'excitation reçoivent les valeurs de tension de condensateur de tous les sous-modules de la branche de module de phase qui leur est associée, en tant que valeurs réelles de sous-module, les valeurs réelles de sous-module sont sommées par les unités d'excitation pour obtenir une valeur d'énergie de branche et la valeur d'énergie de branche est envoyée à l'unité de réglage du courant par les unités d'excitation.

9. Procédé suivant la revendication 8,
**caractérisé en ce que**
les valeurs réelles comprennent des valeurs réelles d'énergie de branche, qui sont transmises des unités (9) d'excitation à l'unité (10) de réglage du courant, les valeurs réelles d'énergie de branche étant formées par sommation des valeurs réelles de sous-modules détectées dans les sous-modules.

10. Procédé suivant l'une des revendications 8 à 9,
**caractérisé en ce que**
l'on forme des valeurs de consigne de tension de branche par une combinaison linéaire de valeurs de consigne intermédiaires de tension, les valeurs de consigne intermédiaires de tension comprenant une valeur (Udc) de consigne de tension continue, la valeur (Udc) de consigne de tension continue état déterminée en fonction de la différence entre une valeur (Idsoll) de courant continu de référence donnée à l'avance et une valeur (Id) de mesure de courant continu obtenue par mesure.

11. Procédé suivant la revendication 10,
**caractérisé en ce que**
l'on détermine une différence de tension totale en formant la différence entre une valeur (ucref) de consigne de tension somme donnée à l'avance et une valeur (uc) de mesure de l'énergie totale déterminée en sommant les tensions aux bornes de tous les accumulateurs d'énergie du convertisseur et on envoie la différence de tension totale à un régleur (12), en obtenant une valeur de courant d'écart d'énergie totale, la valeur de courant d'écart d'énergie totale étant sommée avec une valeur (Idref) de consigne de courant continu, en obtenant la valeur (Idsoll) de courant continu de référence.

12. Procédé suivant l'une des revendications 10 à 11,
**caractérisé en ce que**
les valeurs de consigne intermédiaires de tension comprennent, pour chaque unité (9) d'excitation, une valeur (Unetz1, Unetz2, Unetz3) de consigne de tension de phase de réseau.

13. Procédé suivant la revendication 12,
**caractérisé en ce que**
l'on détermine, au moyen d'un régleur (12), en fonction des valeurs de consigne de courant, les valeurs (Unetz1, Unetz2, Unetz3) de consigne de tension de phase de réseau, à partir de valeurs (I1, I2, I3) de courant de phase, qui sont obtenues en mesurant les courants de phase du côté de la tension alternative des modules (2a, 2b, 2c) de phase.

14. Procédé suivant la revendication 12,
**caractérisé en ce que**
l'on détermine, au moyen d'un régleur, en fonction de valeurs de consigne, les valeurs (Unetz1, Unetz2, Unetz3) de consigne de tension de phase de réseau, en fonction de valeurs (U1, U2, U3) de tension de phase, qui sont obtenues en mesurant les tensions de phase du côté de la tension alternative des modules (2a, 2b, 2c) de phase.

15. Procédé suivant l'une des revendications 10 à 14,
**caractérisé en ce que**
les valeurs de consigne intermédiaires de tension comprennent, pour chaque branche (6p1, 6p2, 6p3, 6n1, 6n2, 6n3) de module de phase, une valeur (Uzwgp1, Uzwgp2, Uzwgp3, Uzwgnl, Uzwgn2, Uzwgn3) de consigne intermédiaire de tension de branche, dans lequel
on détermine, au moyen d'un régleur (12), les valeurs (Uzwgp1, Uzwgp2, Uzwgp3, Uzwgnl, Uzwgn2, Uzwgn3) de consigne intermédiaires de tension de branche en fonction de valeurs (Ip1, Ip2, Ip3, In1, In2, In3) de courant de branche agrandies, dans lequel on calcule chaque valeur (Ip1, Ip2, Ip3, In1, In2, In3) de courant de branche agrandie, en formant la somme d'une valeur (Izwgp1, Izwgp2, Izwgp3, Izwgn1, Izwgn2, Izwgn3) de mesure de courant de branche de module de phase, qui est obtenue en détectant un courant de branche de module de phase passant dans la branche (6p1, 6p2, 6p3, 6n1, 6n2, 6n3) de module de phase respective, de valeurs (Ikr1, Ikr2, Ikr3) de consigne de courant circulaire fixé et de valeurs (Ibalp1, Ibalp2, Ibalp3, Ibaln1, Ibaln2, Ibaln3) de consigne de courant de symétrisation fixées, les valeurs (Ibalp1, Ibalp2, Ibalp3, Ibaln1, Ibaln2, Ibaln3) de consigne de courant de symétrisation étant déterminées en fonction des valeurs réelles d'énergie de branche des branches (6p1, 6p2, 6p3, 6n1, 6n2, 6n3) de module de phase et dans lequel les valeurs de consigne de courant circulaire servent à fixer des courants circulaires, qui sont des parties de courant de branche de module de phase.

16. Procédé suivant la revendication 15,
**caractérisé en ce que**
les valeurs de consigne intermédiaires de tension de branche ont une tension (Uasym) de consigne d'asymétrie, dans lequel on fixe la tension (Uasym) de consigne d'asymétrie
- par mesure de la tension entre une borne (p) de courant continu positive et la terre, en obtenant une valeur (Udp) de tension continue positive et par mesure de la tension entre une borne (n) de tension continue négative et la terre, en obtenant une valeur (Udn) de tension continu négative,
- par formation de la différence des valeurs absolues de la valeur de tension continue positive et de la valeur de tension continue négative, en obtenant une différence (Δud) de tension continue et
- par application de la différence (Δud) de tension continue à l'entrée d'un régleur, en obtenant une tension (Uasym) de consigne d'asymétrie à la sortie du régleur.

17. Procédé suivant la revendication 15,
**caractérisé en ce que**,
pour déterminer les valeurs (Uzwgp1, ..., Uzwgn3) de consigne intermédiaires de tension de branche, on décompose des valeurs (Ip1, Ip2, Ip3, In1, In2, In3) de courant de branche agrandies, comme grandeur d'entrée de la régulation, en une proportion de courant de réseau et en un proportion de courant circulaire.

18. Procédé suivant la revendication 15,
**caractérisé en ce que**
l'on régule chaque valeur (Ip1, Ip2, Ip3, In1, In2, In3) de courant de branche agrandie indépendamment du reste des valeurs (Ip1, Ip2, Ip3, In1, In2, In3) de courant de branche agrandies.

19. Procédé suivant la revendication 15,
**caractérisé en ce qu'**
en mesurant les courants de phase du côté de la tension alternative, on obtient des valeurs (I1, I2, I3) de courant de phase et en mesurant des tensions de phase du côté de la tension alternative des branches de module de phase, on obtient des valeurs (U1, U2, U3) de tension de phase, à partir des valeurs (I1, U2, U3) de courant de phase et des valeurs (U1, U2, U3) de tension de phase, on détermine, en fonction de valeurs de consigne, au moyen d'un régleur, des valeurs (IHa1, IHbe) de courant auxiliaire, on additionne les valeurs (IHa1, IHbe) de courant auxiliaire aux valeurs (Ip1, Ip2, Ip3, In1, In2, In3) de courant de branche agrandies ou on les en retranche, en obtenant des sommes auxiliaires ou des différences auxiliaires, on applique les sommes auxiliaires et/ou les différences auxiliaires à l'entrée d'un régleur (12), on prélève, à la sortie dudit régleur (12), les valeurs (Uzwgp1, Uzwgp2, Uzwgp3, Uzwgnl, Uzwgn2, Uzwgn3) de consigne intermédiaires de tension de branche.
